# EUROPEAN PATENT APPLICATION

(11) **EP 4 611 420 A1**
(43) Date of publication of application: **03.09.2025**
(21) Application number: 22963198.1
(22) Date of filing: 28.10.2022
(51) Int. Cl.: H04W 24/08

(54) **MODEL PERFORMANCE MONITORING METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/128405
(87) International publication number: WO 2024/087217

(57) **Abstract**

The present disclosure relates to a model performance monitoring method and apparatus, a device, and a storage medium. The method comprises: determining model performance information; and sending the model performance information to a network device. A terminal determines model performance information and sends the model performance information to a network device, so that the network device can monitor the performance condition of a beam prediction model in a timely manner according to the model performance information, thereby improving the beam prediction accuracy of the beam prediction model.

## Description

### TECHNICAL FIELD

The present disclosure relates to the field of communication technologies and, in particular, to a model performance monitoring method and apparatus, a device, and a storage medium.

### BACKGROUND

In new radio (NR) networks, especially when a communication frequency band is in frequency range 2, due to rapid attenuation of a high frequency channel, beam-based transmission and reception need to be used in order to ensure a coverage range.

In some beam management processes, a network device configures a reference signal resource set used for beam measurement. A terminal performs measurement on reference signal resources in the reference signal resource set. The terminal reports an identification (identity, ID) of a strong portion of the reference signal resources, and a corresponding layer 1 reference signal received power (L1-RSRP) and/or a layer 1 signal to interference plus noise ratio (L1-RSRP) to the network device.

In the current conventional approach, the reference signal resource set configured by the network device includes X reference signals, each of the reference signals corresponds to a different transmit beam of the network device. Then, for each reference signal, the terminal needs to use all receive beams to perform measurement on that reference signal. Therefore, the number of beam pairs that the terminal needs to measure is M*N, where M indicates the number of transmit beams of the network device, and N is the number of receive beams of the terminal.

In some cases, in order to reduce the number of beam pairs to be measured by the terminal, an artificial intelligence (AI) model may be used for a beam prediction. However, the AI model has a certain life cycle or a certain scope of application. For example, the AI model is applicable to some specific environments, or is applicable to specific time periods such as morning and evening peaks.

However, there is currently no scheme involving how to monitor performance of the AI model to avoid a beam prediction that cannot meet a task requirement due to performance reduction of the AI model.

### SUMMARY

To overcome the problems in the related art, the present disclosure provides a model performance monitoring method and apparatus, a device, and a storage medium.

According to a first aspect of embodiments of the present disclosure, there is provided a model performance monitoring method. The method is applied to a terminal, and includes determining model performance information, and sending the model performance information to a network device.

According to a second aspect of the embodiments of the present disclosure, there is provided a model performance monitoring method. The method is applied to a network device, and includes receiving model performance information sent by a terminal.

According to a third aspect of the embodiments of the present disclosure, there is provided a model performance monitoring apparatus. The apparatus is configured in a terminal. The apparatus includes a determining module configured to determine model performance information, and a sending module configured to send the model performance information to a network device.

According to a fourth aspect of the embodiments of the present disclosure, there is provided a model performance monitoring apparatus. The apparatus is configured in a network device. The apparatus includes a receiving module configured to receive model performance information sent by a terminal.

According to a fifth aspect of the embodiments of the present disclosure, there is provided a model performance monitoring device including a processor and a memory configured to store an instruction executable by the processor, where the processor is configured to perform any method in the first aspect.

According to a sixth aspect of the embodiments of the present disclosure, there is provided a model performance monitoring device including a processor and a memory configured to store an instruction executable by the processor, where the processor is configured to perform any method in the second aspect.

According to a seventh aspect of the embodiments of the present disclosure, there is provided a non-transitory computer-readable storage medium. When an instruction in the storage medium is executed by a processor of a terminal, the terminal is caused to be capable of performing any method in the first aspect.

According to an eighth aspect of the embodiments of the present disclosure, there is provided a non-transitory computer-readable storage medium. When an instruction in the storage medium is executed by a processor of a network device, the network device is caused to be capable of performing any method in the second aspect.

The technical solutions provided by the embodiments of the present disclosure may include the following beneficial effects. The terminal determines the model performance information, and sends the model performance information to the network device. This enables the network device to monitor, based on the model performance information, the performance of the beam prediction model in a timely manner, thereby improving accuracy of the beam prediction model for beam prediction.

It should be understood that the above general description and the subsequent detailed description are exemplary and explanatory only, and do not limit the present disclosure.

### BRIEF DESCRIPTION OF THE DRAWINGS

The accompanying drawings herein are incorporated into the specification and form a part of the specification, illustrate embodiments consistent with the present disclosure, and are used in conjunction with the specification to explain principles of the present disclosure.
FIG. 1 is a schematic diagram of a wireless communication system illustrated according to an exemplary embodiment.
FIG. 2 is a flowchart of a model performance monitoring method illustrated according to an exemplary embodiment.
FIG. 3 is a flowchart of another model performance monitoring method illustrated according to an exemplary embodiment.
FIG. 4 is a flowchart of a yet another model performance monitoring method illustrated according to an exemplary embodiment.
FIG. 5 is a flowchart of a further model performance monitoring method illustrated according to an exemplary embodiment.
FIG. 6 is a flowchart of another model performance monitoring method illustrated according to an exemplary embodiment.
FIG. 7 is a flowchart of a yet another model performance monitoring method illustrated according to an exemplary embodiment.
FIG. 8 is a flowchart of a further model performance monitoring method illustrated according to an exemplary embodiment.
FIG. 9 is a flowchart of another model performance monitoring method illustrated according to an exemplary embodiment.
FIG. 10 is a flowchart of yet another model performance monitoring method illustrated according to an exemplary embodiment.
FIG. 11 is a flowchart of a further model performance monitoring method illustrated according to an exemplary embodiment.
FIG. 12 is a flowchart of another model performance monitoring method illustrated according to an exemplary embodiment.
FIG. 13 is a flowchart of yet another model performance monitoring method illustrated according to an exemplary embodiment.
FIG. 14 is a flowchart of a further model performance monitoring method illustrated according to an exemplary embodiment.
FIG. 15 is a schematic diagram of a model performance monitoring signaling interaction illustrated according to an exemplary embodiment.
FIG. 16 is a schematic diagram of a model performance monitoring apparatus illustrated according to an exemplary embodiment.
FIG. 17 is a schematic diagram of another model performance monitoring apparatus illustrated according to an exemplary embodiment.
FIG. 18 is a schematic diagram of a model performance monitoring device illustrated according to an exemplary embodiment.
FIG. 19 is a schematic diagram of another model performance monitoring device illustrated according to an exemplary embodiment.

### DETAILED DESCRIPTION

Exemplary embodiments will be described herein in detail, examples of which are indicated in the accompanying drawings. When the following description relates to the accompanying drawings, the same numerals in different accompanying drawings indicate the same or similar elements unless otherwise indicated. The embodiments described in the following exemplary embodiments do not represent all embodiments consistent with the present disclosure.

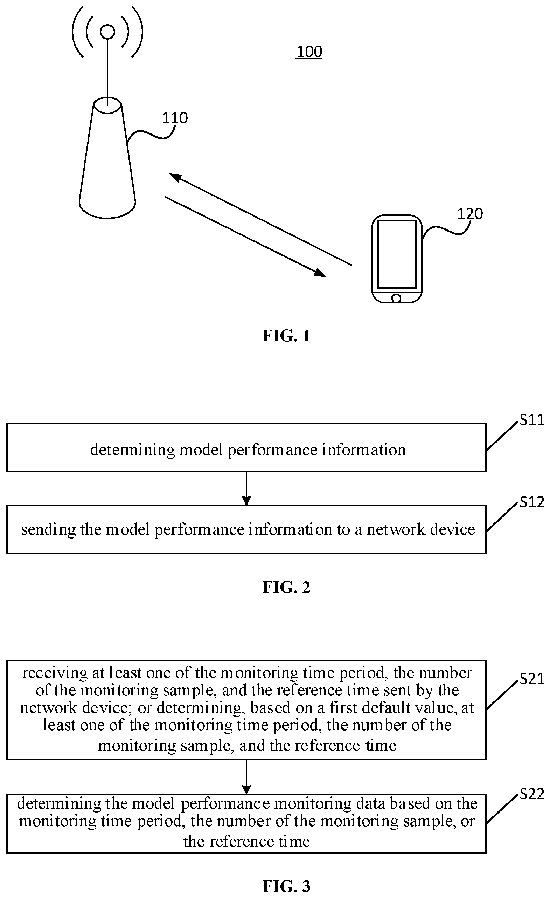

The communication method involved in the present disclosure may be applied to the wireless communication system 100 shown in FIG. 1. The network system may include a network device 110 and a terminal 120. It can be understood that the wireless communication system shown in FIG. 1 is for schematic illustration only, and that the wireless communication system may include other network devices, for example, the wireless communication system may also include a core network device, a wireless relay device, and a wireless backhaul device, which are not depicted in FIG. 1. The embodiments of the present disclosure do not limit the number of network devices and the number of terminals included in the wireless communication system.

It can be further understood that the wireless communication system in the embodiments of the present disclosure is a network providing a wireless communication function. The wireless communication system may use different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), and carrier sense multiple access with collision avoidance. According to the capacity, rate, time delay and other factors of different networks, the networks may be divided into 2G (English: generation) networks, 3G networks, 4G networks, or future evolution networks, such as the 5th generation wireless communication system (5G) networks. The 5G networks may also be referred to as new radio (NR) networks. For ease of description, the wireless communication network may sometimes be referred to as a network in the present disclosure.

Further, the network device 110 involved in the present disclosure may also be referred to as a wireless access network device. The wireless access network device may be a base station, an evolved Node B (eNB), a home base station, an access point (AP) in a wireless fidelity (WIFI) system, a wireless relay node, a wireless backhaul node, a transmission point (TP), or a TRP, etc. The wireless access network device may also be a gNB in an NR system, or a component or a portion of devices that constitutes a base station, etc. The network device may also be a vehicle-mounted device when the wireless communication system is a vehicle-to-everything (V2X) communication system. It should be understood that the embodiments of the present disclosure do not limit the specific technology and the specific device form used for the network device.

Further, the terminal 120 involved in the present disclosure may also be referred to as a terminal device, a user equipment (UE), a mobile station (MS), and a mobile terminal (MT), etc., and is a device that provides voice and/or data connectivity to a user. For example, the terminal may be a device with a wireless connectivity function, such as a handheld device, and a vehicle-mounted device. Currently, some examples of the terminal are: a smartphone (mobile phone), a pocket personal computer (PPC), a handheld computer, a personal digital assistant (PDA), a laptop computer, a tablet computer, a wearable device, or a vehicle-mounted device, etc. In addition, the terminal device may also be a vehicle-mounted device when the wireless communication system is a V2X communication system. It should be understood that the embodiments of the present disclosure do not limit the specific technology and the specific device form used for the terminal.

In the embodiments of the present disclosure, the network device 110 and the terminal 120 may use any feasible wireless communication technology to achieve mutual data transmission. In some embodiments, a transmission channel through which the network device 110 sends data to the terminal 120 is referred to as a downlink channel (DL), and a transmission channel through which the terminal 120 sends data to the network device 110 is referred to as an uplink channel (UL). It can be understood that the network device involved in the embodiments of the present disclosure may be a base station. Of course, the network device may also be any other possible network device, and the terminal may be any possible terminal, which is not limited in the present disclosure.

In the NR, especially when a communication band is in frequency range 2, due to rapid attenuation of a high frequency channel, beam-based transmission and reception need to be used in order to ensure a coverage range.

In some conventional beam management processes, the network device configures a reference signal resource set used for beam measurement. The terminal performs measurement on reference signal resources in the reference signal resource set. The terminal reports an identification (ID) of a strong portion of the reference signal resources, and a corresponding layer 1 reference signal received power (L1-RSRP) and/or a layer 1 signal to interference plus noise ratio (L1-RSRP) to the network device.

In the current conventional approach, assuming that the reference signal resource set configured by the network device includes X reference signals, each of the reference signals corresponds to a different transmit beam of the network device. Then, for each reference signal, the terminal needs to use all receive beams to perform measurement on that reference signal, thereby obtaining a beam measurement quality corresponding to each receive beam in all of the receive beams. In some cases, one or more best beam measurement qualities, and/or beam identifications corresponding to the best beam measurement qualities may be determined. Therefore, the number of beam pairs that the terminal needs to measure is M*N, where M indicates the number of transmit beams of the network device, and N is the number of receive beams of the terminal.

In some related arts, in order to reduce the number of beam pairs to be measured by the terminal, an artificial intelligence (AI) model is used for a beam prediction. For example, the number of beam pairs that the terminal originally needs to measure in total is M*N. When the AI model is used for the beam prediction, for a spatial domain beam prediction, the terminal only needs to measure a portion of the M*N beam pairs. For example, the terminal measures 1/8, or 1/4 of the M*N beam pairs, etc. Then, the beam measurement qualities of these beam pairs obtained through measurement are input into the AI model, and the AI model can output beam information of the M*N beam pairs. For a time domain beam prediction, the terminal may measure the beam measurement quality of the beam pair at a historical time, and in this way, beam information of the beam pair at a future timepoint is predicted.

However, the AI model has a certain life cycle or a certain scope of application. For example, some AI models are applicable to suburban areas, some AI models are applicable to urban areas, and some AI models are applicable to some specific environments such as indoor environments. As another example, some AI models are applicable to morning and evening peak hours, and some AI models are applicable to specific time periods such as working hours when there are fewer people. As yet another example, some AI models may be applicable to a specific time and a specific environment, for example, the AI model is applicable to roads during working hours when there are fewer people. Therefore, performance of the AI model needs to be monitored in real time. When the performance of the AI model fails to meet the corresponding requirement, it is required to perform operations such as updating and switching on the AI model in a timely manner.

However, there is currently no scheme involving how to monitor the performance of the AI model to avoid a beam prediction that cannot meet a task requirement due to performance reduction of the AI model. Therefore, how to monitor the AI model has become an urgent problem to be solved.

Therefore, the present disclosure provides a model performance monitoring method and apparatus, a device, and a storage medium, where the terminal determines the model performance information, and sends the model performance information to the network device. This enables the network device to monitor, based on the model performance information, the performance of the beam prediction model in a timely manner, thereby improving the accuracy of the beam prediction model for the beam prediction.

FIG. 2 is a flowchart of a model performance monitoring method illustrated according to an exemplary embodiment. As shown in FIG. 2, the method is applied to a terminal, and may include the following steps S11 to S12.

At step S11, model performance information is determined.

In some embodiments, the terminal determines the model performance information. The model performance information may be beam information corresponding to some beams. The model performance information may be used for monitoring a beam prediction model to determine performance of the beam prediction model.

It can be understood that the beam prediction model involved in the present disclosure may be the AI model mentioned above.

At step S12, the model performance information is sent to a network device.

In some embodiments, the terminal may send the model performance information determined in S11 to the network device, facilitating the network device to determine, based on the model performance information sent by the terminal, the performance of the beam prediction model.

In the present disclosure, the terminal determines the model performance information, and sends the model performance information to the network device. This enables the network device to monitor, based on the model performance information, the performance of the beam prediction model in a timely manner, thereby improving the accuracy of the beam prediction model for the beam prediction.

In the beam determination method provided in the embodiments of the present disclosure, the model performance information includes model performance monitoring data and/or a model performance indicator.

In some embodiments, the model performance information determined by the terminal may include model performance monitoring data. The model performance monitoring data may be beam information of a corresponding beam monitored by the terminal.

In response to the beam prediction model being located at the terminal side, the model performance monitoring data determined by the terminal may include one or more of the following: beam information of a portion of or all of the beams obtained through actual measurement performed by the terminal, and beam information of a portion of or all of the beams obtained through the prediction performed by the beam prediction model. Of course, the model performance monitoring data may also include any other information used for model monitoring, which is not limited in the present disclosure.

In response to the beam prediction model being located at the network device side, the model performance monitoring data determined by the terminal may include beam information of a portion of or all of the beams obtained through actual measurement performed by the terminal, and any other information used for model monitoring, which is not limited in the present disclosure.

In some embodiments, the model performance information determined by the terminal may include a model performance indicator. In some embodiments, the model performance indicator may reflect, to a certain extent, the performance of the beam prediction model. The model performance indicator may or may not be obtained based on the model performance monitoring data.

In the present disclosure, the beam prediction model can be monitored through the model performance monitoring data and/or the model performance indicator, enabling the network device to monitor, based on the model performance monitoring data and/or the model performance indicator, the performance of the beam prediction model in a timely manner, thereby improving the accuracy of the beam prediction model for the beam prediction.

In the beam determination method provided in the embodiments of the present disclosure, in response to the model performance information including the model performance monitoring data, the model performance monitoring data includes at least one of the following: at least one piece of monitoring sample data during a monitoring time period; a piece of monitoring sample data, where the number of the piece of the monitoring sample data is the number of the monitoring sample; and at least one piece of monitoring sample data before a reference time.

In some embodiments, the model performance monitoring data may include at least one piece of monitoring sample data during a monitoring time period.

For example, the monitoring time period may be denoted as T, and the model performance monitoring data may be at least one piece of monitoring sample data included in the T time period. Assuming that C pieces of monitoring sample data are included in the T time period, the model performance monitoring data may be C pieces of monitoring sample data included in the T time period, or the model performance monitoring data may be D pieces of monitoring sample data included in the T time period. Herein, the D pieces of monitoring sample data is a portion of monitoring sample data in the C pieces of monitoring sample data.

For example, the value of D may be the number of times the reference signal for beam measurement is sent included in the T time period, and may also be understood as the number of periods. The period is indicated as the period for which the reference signal for beam measurement is sent. It can be understood that the network device may send a plurality of reference signals in each period for use in beam measurement. Each reference signal is sent once in each period.

It can be understood that whether C pieces of monitoring sample data or D pieces of monitoring sample data are selected specifically may be preset, or indicated by the terminal, or indicated by the network device, which is not limited in the present disclosure.

In some embodiments, the model performance monitoring data may include a piece of monitoring sample data, where the number of the piece of the monitoring sample data is the number of the monitoring sample.

For example, the number of the monitoring sample may be denoted as N, and the model performance monitoring data may be N pieces of monitoring sample data. Herein, N may be preset, or indicated by the terminal, or indicated by the network device, which is not limited in the present disclosure.

In some embodiments, the model performance monitoring data may include at least one piece of monitoring sample data before a reference time.

For example, the model performance monitoring data may include E pieces of monitoring sample data before the reference time. It can be understood that the monitoring sample data before the reference time may include a plurality of pieces of monitoring sample data, and the E pieces of monitoring sample data are a portion of the monitoring sample data in the plurality of pieces of the monitoring sample data. In some embodiments, the reference time and the value of E may be preset, or indicated by the terminal, or indicated by the network device, which is not limited in the present disclosure.

In the present disclosure, different pieces of monitoring sample data are provided as the model performance monitoring data, facilitating the network device to monitor, based on the model performance monitoring data, the performance of the beam prediction model in a timely manner, thereby improving the accuracy of the beam prediction model for the beam prediction.

In the beam determination method provided in the embodiments of the present disclosure, FIG. 3 is a flowchart of another model performance monitoring method illustrated according to an exemplary embodiment. As shown in FIG. 3, determining the model performance information at S11 may include the following steps S21 to S22.

At step S21, at least one of the monitoring time period, the number of the monitoring sample, and the reference time sent by the network device is received; or at least one of the monitoring time period, the number of the monitoring sample, and the reference time is determined based on a first default value.

In some embodiments, the terminal may receive at least one of the monitoring time period, the number of the monitoring sample, and the reference time sent by the network device.

In some embodiments, the terminal may determine, based on a first default value, at least one of the following: the monitoring time period, the number of the monitoring sample, and the reference time. In some embodiments, the first default value may be preset or specified in a protocol, which is not limited in the present disclosure.

At step S22, the model performance monitoring data is determined based on at least one of the following: the monitoring time period, the number of the monitoring sample, and the reference time.

In some embodiments, the terminal may determine the model performance monitoring data based on at least one of the monitoring time period, the number of the monitoring sample, and the reference time received or determined at S22.

For example, the terminal determines, based on the received or determined monitoring time period, at least one piece of monitoring sample data during the monitoring time period. As another example, the terminal determines, based on the received or determined number of the monitoring sample, a piece of monitoring sample data, where the number of the piece of monitoring sample data is the number of the monitoring sample. As yet another example, the terminal determines, based on the received or determined reference time, at least one piece of monitoring sample data before the reference time.

In the present disclosure, the model performance monitoring data is determined through at least one of the monitoring time period, the number of monitoring samples, and the reference time, enabling the network device to monitor, based on the model performance monitoring data, the performance of the beam prediction model in a timely manner, thereby improving the accuracy of the beam prediction model for the beam prediction.

In the beam determination method provided in the embodiments of the present disclosure, in response to at least one of the monitoring time period, the number of the monitoring sample, and the reference time sent by the network device being received, at least one of the monitoring time period, the number of the monitoring sample, and the reference time is carried in a terminal dedicated signaling or a broadcast signaling.

In some embodiments, the terminal may receive the UE dedicated signaling or the broadcast signaling sent by the network device, and determine indication information carried in the UE dedicated signaling or the broadcast signaling. The indication information may indicate at least one of the monitoring time period, the number of the monitoring sample, and the reference time.

In the present disclosure, at least one of the monitoring time period, the number of the monitoring sample, and the reference time can be indicated through the UE dedicated signaling or the broadcast signaling, facilitating the terminal to determine the model performance monitoring data based on at least one of the monitoring time period, the number of the monitoring sample, and the reference time as indicated. This enables the network device to monitor, based on the model performance monitoring data, the performance of the beam prediction model in a timely manner, thereby improving the accuracy of the beam prediction model for the beam prediction.

In the beam determination method provided in the embodiments of the present disclosure, in response to the beam prediction model being run on the terminal, the monitoring sample data includes at least one of the following:
first beam information in a first beam set obtained by the terminal based on an output of the beam prediction model, where an input to the beam prediction model includes second beam information of a second beam set measured by the terminal; and the second beam set is a subset of the first beam set, or a beam in the second beam set is capable of covering a plurality of beams in the first beam set, or the first beam set is the same as the second beam set;
third beam information in the first beam set measured by the terminal; and
a timestamp corresponding to the monitoring sample data.

In some embodiments, in response to the beam prediction model being run on the terminal, the monitoring sample data determined by the terminal may include the first beam information in the first beam set obtained by the terminal based on the output of the beam prediction model.

It can be understood that the input to the beam prediction model may include the second beam information in the second beam set measured by the terminal. That is, the beam prediction model may predict, through the second beam information of the second beam set measured by the terminal, the first beam information in the first beam set. In some embodiments, the second beam set may be a subset of the first beam set; or a beam in the second beam set is capable of covering a plurality of beams in the first beam set; or the first beam set is the same as the second beam set. It should be understood that in the case where the first beam set is the same as the second beam set, the beam prediction model may be thought of as predicting beam information at a future time by using beam information at a historical time.

For example, the first beam set may be denoted as set A, and the second beam set may be denoted as set B.

It can be understood that a portion of the first beam information in the first beam set may be the beam information actually measured by the terminal, and another portion of the first beam information in the first beam set may be the beam information predicted by the beam prediction model.

For example, the first beam information in the first beam set may be the beam information of all the beams output by the beam prediction model. Herein, the all the beams may be all the beams included in set A. As another example, the first beam information in the first beam set may be the beam information of K preferred beams. In some embodiments, the K preferred beams may be beams whose beam quality is determined to satisfy a condition based on the output of the beam prediction model. For example, it may be determined that when a beam quality of a beam satisfies a beam quality threshold, the beam may be determined as a preferred beam. Alternatively, the beams may be ranked from high to low based on the beam quality, and the first K beams are selected as the preferred beams. It can be understood that the specific determination manner of the preferred beam is not limited in the present disclosure.

The beam involved in the present disclosure is a beam. Performing beam measurement may be measuring a reference signal, thereby measuring an L1-RSRP and/or an L1-SINR corresponding to the reference signal. In some embodiments, the reference signal may include a synchronization signal block (SSB), a channel state information reference signal (CSI-RS), and/or a sounding reference signal (SRS). The beam indication for the beam may be an indication of a transmission configuration indication (TCI) state. The TCI may be used for informing the terminal that the beam for use in receiving a physical downlink control channel (PDCCH) and/or its demodulation reference signal (DMRS), and a physical downlink shared channel (PDSCH) and/or its DMRS is the receive beam that is the same one for receiving which SSB or CSI-RS sent by the network device; or the TCI may be used for informing the terminal that the beam for use in sending a physical uplink control channel (PUCCH) and/or its DMRS, and a physical uplink shared channel (PUSCH) and/or its DMRS is the transmit beam corresponding to the receive beam that is the same one for receiving which SSB or CSI-RS sent by the network device, or the transmit beam that is the same one for sending which SRS by the terminal device.

In some embodiments, the TCI state includes at least one quasi co-location (QCL) type, such as QCL Type A, QCL Type B, QCL Type C, and QCL Type D. In some embodiments, QCL Type D is receive parameter information, which may be commonly referred to as a beam. QCL Type A, QCL Type B, and QCL Type C include at least one of the following: a Doppler shift, a Doppler spread, an average time delay, and a time delay spread related parameter. For an uplink beam, the beam indication may be spatial relation information, spatial filter information, or an uplink TCI state.

In some embodiments, in response to the beam prediction model being run on the terminal, the monitoring sample data determined by the terminal may include the third beam information in the first beam set measured by the terminal.

For example, the third beam information in the first beam set may be the beam information of all the beams included in set A. As another example, the third beam information in the first beam set may be the beam information of K' preferred beams. In some embodiments, the K' preferred beams may be beams whose beam quality determined by the terminal through measurement satisfies a condition. Alternatively, the beams may be ranked from high to low based on the beam quality, and the first K' beams are selected as the preferred beams.

It can be understood that K' and K may be the same or different. Of course, even if the values of K' and K are the same, the beam identification and/or its beam quality corresponding to the beam information included in the third beam information may be different from the beam identification and/or its beam quality corresponding to the beam information included in the first beam information. For example, the beam identification included in the first beam information is transmit beam 1 and/or receive beam 2, while the beam identification included in the third beam information is transmit beam 3 and/or receive beam 4. Alternatively, even if the first beam information and the third beam information both include transmit beam 1 and/or receive beam 2, their corresponding beam qualities may be different. For example, the beam quality corresponding to transmit beam 1 and/or receive beam 2 included in the first beam information is X decibels (dB), while the beam quality corresponding to transmit beam 1 and/or receive beam 2 included in the third beam information is Y dB. In some embodiments, the transmit beam is the transmit beam corresponding to the network device, and may be characterized by a reference signal identification. The receive beam is the receive beam corresponding to the terminal.

It should be noted that the third beam information in the first beam set is the beam information actually measured by the terminal. For example, the third beam information in the first beam set is measured by using a conventional manner.

It can be understood that through the above-described first beam information in the first beam set obtained by the terminal based on the output of the beam prediction model, and the third beam information in the first beam set measured by the terminal, the network device can compare the first beam information obtained by the terminal based on the output of the beam prediction model with the third beam information obtained through actual measurement performed by the terminal, thereby monitoring the performance of the beam prediction model run on the terminal.

In some embodiments, in response to the beam prediction model being run on the terminal, the monitoring sample data determined by the terminal may include a timestamp corresponding to the monitoring sample data.

It can be understood that the timestamp is used for indicating a monitoring time of the monitoring sample data.

The present disclosure provides a plurality of types of monitoring sample data as the model performance monitoring data. This enables the network device to monitor, based on the model performance monitoring data, the performance of the beam prediction model in a timely manner, thereby improving the accuracy of the beam prediction model for the beam prediction.

In the beam determination method provided in the embodiments of the present disclosure, in response to the beam prediction model being run on the network device, the monitoring sample data includes at least one of the following:
second beam information of a second beam set measured by the terminal, where an input to the beam prediction model includes the second beam information of the second beam set measured by the terminal, and an output of the beam prediction model includes first beam information in a first beam set; and the second beam set is a subset of the first beam set, or a beam in the second beam set is capable of covering a plurality of beams in the first beam set, or the first beam set is the same as the second beam set;
third beam information in the first beam set measured by the terminal; and
a timestamp corresponding to the monitoring sample data.

In some embodiments, in response to the beam prediction model being run on the network device, the monitoring sample data determined by the terminal may include the second beam information in the second beam set obtained by the terminal through measurement.

It can be understood that the input to the beam prediction model may include the second beam information of the second beam set measured by the terminal, and the output of the beam prediction model includes the first beam information in the first beam set. That is, the beam prediction model may predict, through the second beam information of the second beam set measured by the terminal, the first beam information in the first beam set. In some embodiments, the second beam set may be a subset of the first beam set; or a beam in the second beam set is capable of covering a plurality of beams in the first beam set; or the first beam set is the same as the second beam set. It should be understood that in the case where the first beam set is the same as the second beam set, the beam prediction model may be thought of as predicting beam information at a future time by using beam information at a historical time.

It should be noted that the second beam information in the second beam set is the beam information actually measured by the terminal. For example, the second beam information in the second beam set is measured by using a conventional manner.

In some embodiments, in response to the beam prediction model being run on the network device, the monitoring sample data determined by the terminal may include the third beam information in the first beam set measured by the terminal.

For example, the third beam information in the first beam set may be the beam information of all the beams included in set A. As another example, the third beam information in the first beam set may be the beam information of K' preferred beams. In some embodiments, the K' preferred beams may be beams whose beam quality determined by the terminal through measurement satisfies a condition. Alternatively, the beams may be ranked from high to low based on the beam quality, and the first K' beams are selected as the preferred beams.

It should be noted that the third beam information in the first beam set is the beam information actually measured by the terminal. For example, the third beam information in the first beam set is measured by using a conventional manner.

It can be understood that through the above-described second beam information of the second beam set measured by the terminal, and the third beam information in the first beam set measured by the terminal, the network device can obtain, by performing the beam prediction based on the second beam information of the second beam set and the beam prediction model, the first beam information in the first beam set output by the beam prediction model. And the network device compares the first beam information obtained through the output of the beam prediction model with the third beam information obtained through actual measurement performed by the terminal, thereby monitoring the performance of the beam prediction model run on the network device.

In some embodiments, in response to the beam prediction model being run on the network device, the monitoring sample data determined by the terminal may include a timestamp corresponding to the monitoring sample data.

It can be understood that the timestamp is used for indicating a monitoring time of the monitoring sample data.

The present disclosure provides a plurality of types of monitoring sample data as the model performance monitoring data. This enables the network device to monitor, based on the model performance monitoring data, the performance of the beam prediction model in a timely manner, thereby improving the accuracy of the beam prediction model for the beam prediction.

In the beam determination method provided in the embodiments of the present disclosure, the first beam information includes at least one of the following: a first beam identification corresponding to at least one beam in the first beam set, an L1-RSRP corresponding to a beam indicated by the first beam identification, and an L1-SINR corresponding to the beam indicated by the first beam identification. The second beam information includes at least one of the following: a second beam identification corresponding to at least one beam in the second beam set, an L1-RSRP corresponding to a beam indicated by the second beam identification, and an L1-SINR corresponding to the beam indicated by the second beam identification. The third beam information includes at least one of the following: a third beam identification corresponding to at least one beam in the first beam set, an L1-RSRP corresponding to a beam indicated by the third beam identification, and an L1-SINR corresponding to the beam indicated by the third beam identification.

The identification involved in the present disclosure may, for example, be an ID or an index.

In some embodiments, the first beam information includes at least one of the following: a first beam identification corresponding to at least one beam in the first beam set, an L1-RSRP corresponding to a beam indicated by the first beam identification, and an L1-SINR corresponding to the beam indicated by the first beam identification. For example, the at least one beam in the first beam set involved in the first beam information may be all the beams included in set A or K preferred beams included in set A. It can be understood that the L1-RSRP and/or the L1-SINR corresponding to the beam indicated by the first beam identification involved in the first beam information may be obtained through monitoring performed by the terminal, or may be predicted by the beam prediction model. This is because a portion of the beam information corresponding to all the beams output by the beam prediction model corresponds to the beam information input to the beam prediction model, and another portion of the beam information corresponding to all the beams output by the beam prediction model is predicted by the beam prediction model.

In some embodiments, the first beam information includes a first beam identification corresponding to at least one beam in the first beam set. For example, the at least one beam in the first beam set involved in the first beam information may be all the beams included in set A or K preferred beams included in set A.

In some embodiments, the first beam information includes a beam quality corresponding to a beam indicated by the first beam identification. The beam quality may include an L1-RSRP and/or an L1-SINR. For example, the first beam information includes the beam qualities of all the beams in the first beam set, but does not include the first beam identification.

In some embodiments, the second beam information includes at least one of the following: a second beam identification corresponding to at least one beam in the second beam set, an L1-RSRP corresponding to a beam indicated by the second beam identification, and an L1-SINR corresponding to the beam indicated by the second beam identification. For example, the at least one beam in the second beam set may be all the beams or a portion of the beams in the second beam set. Typically, the at least one beam in the second beam set may be all the beams in the second beam set. It can be understood that the beam in the second beam set is the beam to be input to the beam prediction model for performing the beam prediction.

In some embodiments, the second beam information includes a second beam identification corresponding to at least one beam in the second beam set. For example, the at least one beam in the second beam set involved in the second beam information may be all the beams included in set B.

In some embodiments, the second beam information includes a beam quality corresponding to a beam indicated by the second beam identification. The beam quality may include an L1-RSRP and/or an L1-SINR. For example, the second beam information includes the beam qualities of all the beams in the second beam set, but does not include the second beam identification.

In some embodiments, the third beam information includes at least one of the following: a third beam identification corresponding to at least one beam in the first beam set, an L1-RSRP corresponding to a beam indicated by the third beam identification, and an L1-SINR corresponding to the beam indicated by the third beam identification. For example, the at least one beam in the first beam set involved in the third beam information may be all the beams included in set A or K' preferred beams included in set A. It can be understood that the L1-RSRP and/or the L1-SINR corresponding to the beam indicated by the third beam identification involved in the third beam information may be obtained through monitoring performed by the terminal.

In some embodiments, the third beam information includes a third beam identification corresponding to at least one beam in the first beam set. For example, the at least one beam in the first beam set involved in the third beam information may be all the beams included in set A or K' preferred beams included in set A.

In some embodiments, the third beam information includes a beam quality corresponding to a beam indicated by the third beam identification. The beam quality may include an L1-RSRP and/or an L1-SINR. For example, the third beam information includes the beam qualities of all the beams in the first beam set, but does not include the third beam identification.

In the present disclosure, by using the beam identifications corresponding to different beams, and the L1-RSRP and/or the L1-SINR of the respective beam as different monitoring sample data, the network device is enabled to monitor, based on the model performance monitoring data including the monitoring sample data, the performance of the beam prediction model in a timely manner, thereby improving the accuracy of the beam prediction model for the beam prediction.

In the beam determination method provided in the embodiments of the present disclosure, the timestamp of the monitoring sample includes any of the following: a monitoring time of the monitoring sample data; and a universal interval time, where the universal interval time is used for indicating a time interval between two adjacent pieces of the monitoring sample data.

In some embodiments, the timestamp of the monitoring sample may be a monitoring time of the monitoring sample data. For example, the timestamp of the monitoring sample may be indicated in an explicit manner. That is, the timestamp of the monitoring sample directly indicates the monitoring time of the corresponding monitoring sample data. The monitoring time may also be understood as a collection time of the corresponding sample of the monitoring sample data.

In some embodiments, the timestamp of the monitoring sample may be a universal interval time. Herein, the universal interval time is used for indicating a time interval between two adjacent pieces of the monitoring sample data.

For example, the timestamp of the monitoring sample may be indicated in an implicit manner. That is, the universal interval time indicates that each piece of monitoring sample data corresponds to the same time period length; the universal interval time may also be understood as the universal interval time indicating that two adjacent pieces of monitoring sample data are provided with the same time period length. In this embodiment, each piece of monitoring sample data is saved in the model performance monitoring data in chronological order. Thus, the monitoring time of each piece of monitoring sample data may be indirectly determined based on the universal interval time.

It can be understood that when the timestamp of the monitoring sample is indicated in an explicit or implicit manner, a monitoring time of one piece of monitoring sample data may be at least included, such as the monitoring time of the first piece of monitoring sample data.

In the present disclosure, the timestamp of the monitoring sample is indicated in an explicit or implicit manner, enabling the network device to monitor, based on the monitoring sample data including the time information, the performance of the beam prediction model in a timely manner, thereby improving the accuracy of the beam prediction model for the beam prediction.

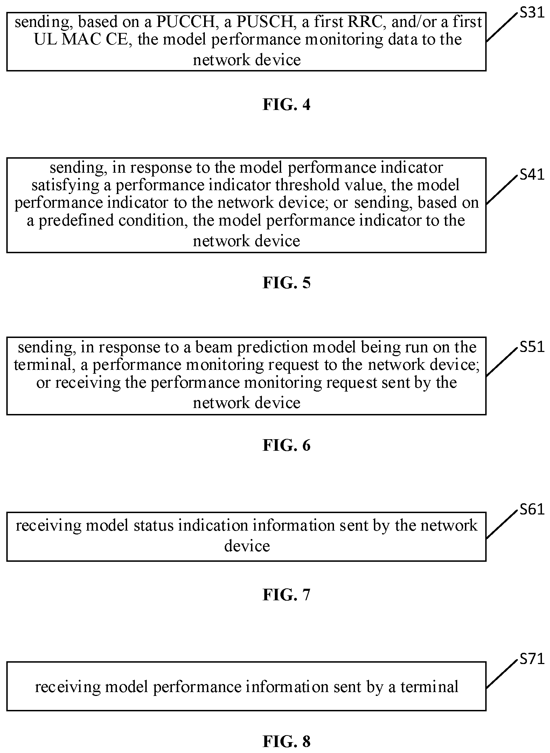

In the beam determination method provided in the embodiments of the present disclosure, FIG. 4 is a flowchart of yet another model performance monitoring method illustrated according to an exemplary embodiment. As shown in FIG. 4, sending the model performance information to the network device at S12 may include the following step S31.

At step S31, the model performance monitoring data is sent to the network device based on a PUCCH, a PUSCH, a first radio resource control (RRC), and/or a first uplink (UL) media access control control element (MAC CE).

In some embodiments, the terminal may send the model performance monitoring data to the network device based on the PUCCH, the PUSCH, the first RRC, and/or the first ULMAC CE.

In the present disclosure, the model performance monitoring parameter can be sent through the PUCCH, the PUSCH, the first RRC, and/or the first UL MAC CE, enabling the network device to monitor, based on the model performance monitoring data, the performance of the beam prediction model in a timely manner, thereby improving the accuracy of the beam prediction model for the beam prediction.

In the beam determination method provided in the embodiments of the present disclosure, in response to the beam prediction model being run on the terminal, the model performance information includes the model performance indicator, and the model performance indicator includes at least one of the following: a prediction accuracy; an average decibel difference; a decibel difference determined based on any one percentage point in a cumulative distribution function; an average throughput difference; a reference signal overhead or a reference signal overhead reduction rate; and an uplink control information overhead.

It can be understood that if the beam prediction model is run on the terminal, the terminal may also determine the model performance indicator. If the beam prediction model is run on the network device, the terminal is not required to determine the model performance indicator.

In some embodiments, the model performance indicator may include a prediction accuracy.

For example, the prediction accuracy may be used for indicating a probability for a correct prediction. The correct prediction means that the K best reference signal identifications predicted by the beam prediction model include the K' best reference signal identifications determined through measurement performed by the terminal. In some embodiments, the identification may be an ID or an index. In some embodiments, the reference signal ID may be, for example, an SSB ID, a CSI-RS ID, or an SRS ID. It can be understood that K and K' are positive integers greater than or equal to 1.

It can be understood that the best reference signal identification corresponds to the beam with the strongest L1-RSRP or the strongest L1-SINR of the reference signal.

The prediction accuracy may be determined based on prediction results of a plurality of predictions, and each prediction result may be a correct prediction or an incorrect prediction. For example, if the K best reference signal identifications predicted by the beam prediction model at the time of this prediction include the K' best reference signal identifications determined through measurement performed by the terminal, it is indicated that this prediction is correct. As another example, if the K best reference signal identifications predicted by the beam prediction model at the time of this prediction do not include the K' best reference signal identifications determined through measurement performed by the terminal, or do not fully include the K' best reference signal identifications determined through measurement performed by the terminal, it is indicated that this prediction is incorrect. The prediction accuracy is the probability that the predictions of a plurality of predictions are correct.

In some embodiments, the model performance indicator may include an average decibel difference. In some embodiments, the average decibel difference may also be referred to as an average L1-RSRP difference, or a dB difference.

For example, the average decibel difference may include at least one of the following: a difference between any two of the first L1-RSRP, the second L1-RSRP, the third L1-RSRP, and the fourth L1-RSRP; or an average value of a plurality of times of differences between any two of the first L1-RSRP, the second L1-RSRP, the third L1-RSRP, and the fourth L1-RSRP.

In some embodiments, the first L1-RSRP is the L1-RSRP measured by the terminal corresponding to the best reference signal identification predicted by the beam prediction model. The second L1-RSRP is the L1-RSRP measured by the terminal corresponding to the best reference signal identification measured by the terminal. The third L1-RSRP is the L1-RSRP predicted by the beam prediction model corresponding to the best reference signal identification predicted by the beam prediction model. The fourth L1-RSRP is the L1-RSRP predicted by the beam prediction model corresponding to the best reference signal identification measured by the terminal.

For example, the average decibel difference may be a difference between the actual L1-RSRP corresponding to the best reference signal identification predicted by the beam prediction model and the actual L1-RSRP corresponding to the actual best reference signal identification measured by the terminal. Or, the average decibel difference may be an average value of a plurality of times of differences between the actual L1-RSRP corresponding to the best reference signal identification predicted by the beam prediction model and the actual L1-RSRP corresponding to the actual best reference signal identification measured by the terminal.

As another example, the average decibel difference may be a difference between the predicted L1-RSRP corresponding to the best reference signal identification predicted by the beam prediction model and the actual L1-RSRP corresponding to the best reference signal identification predicted by the beam prediction model. Or, the average decibel difference may be an average value of a plurality of times of differences between the predicted L1-RSRP corresponding to the best reference signal identification predicted by the beam prediction model and the actual L1-RSRP corresponding to the best reference signal identification predicted by the beam prediction model.

As yet another example, the average decibel difference may be a difference between the actual L1-RSRP corresponding to the best reference signal identification predicted by the beam prediction model and the predicted L1-RSRP corresponding to the best reference signal identification predicted by the beam prediction model. Or, the average decibel difference may be an average value of a plurality of times of differences between the actual L1-RSRP corresponding to the best reference signal identification predicted by the beam prediction model and the predicted L1-RSRP corresponding to the best reference signal identification predicted by the beam prediction model.

As another example, the average decibel difference may be the difference between the actual L1-RSRP corresponding to the actual best reference signal identification measured by the terminal and the predicted L1-RSRP corresponding to the actual best reference signal identification measured by the terminal. Or, the average decibel difference may be an average value of a plurality of times of differences between the actual L1-RSRP corresponding to the actual best reference signal identification measured by the terminal and the predicted L1-RSRP corresponding to the actual best reference signal identification measured by the terminal.

It can be understood that the difference between any two of the first L1-RSRP, the second L1-RSRP, the third L1-RSRP, and the fourth L1-RSRP may also be used as the average decibel difference; or an average value of a plurality of times of differences between any two of the first L1-RSRP, the second L1-RSRP, the third L1-RSRP, and the fourth L1-RSRP may also be used as the average decibel difference.

In some embodiments, the model performance indicator may include a decibel difference determined based on any one percentage point in a cumulative distribution function (CDF).

For example, the CDF may be a corresponding L1-RSRP difference CDF curve obtained based on a plurality of times of differences between any two of the first L1-RSRP, the second L1-RSRP, the third L1-RSRP, and the fourth L1-RSRP. The model performance indicator may be the corresponding L1-RSRP difference at a certain percentage point in the L1-RSRP difference CDF curve.

As another example, the CDF may be a CDF curve obtained based on a difference between the predicted L1-RSRP of each reference signal identification of one or more predictions performed by the beam prediction model and the actual L1-RSRP corresponding to the actual each reference signal identification. That is, the CDF curve may be obtained not only on the basis of the predicted best reference signal and/or the actual best reference signal, but may also be determined by using any two other reference signals.

In some embodiments, the model performance indicator may include an average throughput difference. Herein, the average throughput difference may also be referred to as an average UE throughput difference.

For example, the L1-SINR of the corresponding reference signal, i.e., the first L1-SINR and the second L1-SINR, may be determined based on the predicted best reference signal and the actual best reference signal determined through measurement performed by the terminal. Herein, the first L1-SINR is the L1-SINR of the best reference signal corresponding to the best reference signal identification predicted by the beam prediction model, and the second L1-SINR is the L1-SINR of the best reference signal corresponding to the best reference signal identification measured by the terminal. Then, the capacity may be calculated based on a shannon capacity calculation formula. For example, a first capacity is calculated based on the first L1-SINR, and a second capacity is calculated based on the second L1-SINR. The difference between the two capacities is the average throughput difference.

For example, the average throughput difference may be obtained from a single prediction calculation, or may be an average value of the differences between the capacities taken after a plurality of prediction calculations.

In some embodiments, the model performance indicator includes a prediction accuracy, an average decibel difference, a decibel difference determined based on any percentage point in a cumulative distribution function, and/or an average throughput difference, and the model performance indicator may be determined based on the model performance monitoring data.

In some embodiments, the model performance indicator may include a reference signal overhead or a reference signal overhead reduction rate.

In some embodiments, the model performance indicator may include an uplink control information overhead.

In some embodiments, when the model performance indicator includes information such as the reference signal overhead or the reference signal overhead reduction rate, and/or the uplink control information overhead, the model performance indicator may not be determined based on the model performance monitoring data. The present disclosure provides a plurality of types of model performance indicators, enabling the network device to monitor, based on the model performance indicator, the performance of the beam prediction model in a timely manner, thereby improving the accuracy of the beam prediction model for the beam prediction.

In the beam determination method provided in the embodiments of the present disclosure, FIG. 5 is a flowchart of a further model performance monitoring method illustrated according to an exemplary embodiment. As shown in FIG. 5, in response to the beam prediction model being run on the terminal, sending the model performance information to the network device at S12 may include the following step S41.

At step S41, the model performance indicator is sent to the network device in response to the model performance indicator satisfying a performance indicator threshold value; or the model performance indicator is sent to the network device based on a predefined condition.

In some embodiments, the terminal may send the model performance indicator to the network device when the model performance indicator satisfies a preset performance indicator threshold value.

In some embodiments, the terminal may send the model performance indicator to the network device based on a predefined condition. In some embodiments, the predefined condition may be, for example, that the sending of the model performance indicator is not based on the preset performance indicator threshold value. The terminal may send the model performance indicator to the network device regardless of whether the performance indicator value is large or small, or may send the model performance indicator to the network device when other conditions are satisfied.

In the present disclosure, the model performance indicator is sent when a certain condition is satisfied, enabling the network device to monitor, based on the model performance indicator, the performance of the beam prediction model in a timely manner, thereby improving the accuracy of the beam prediction model for the beam prediction, and at the same time, reducing the consumption of resources caused by the monitoring of the beam prediction model by the network device.

In the beam determination method provided in the embodiments of the present disclosure, FIG. 6 is a flowchart of another model performance monitoring method illustrated according to an exemplary embodiment. The method may further include the following step S51 before determining the model performance information at S11.

At step S51, a performance monitoring request is sent to the network device in response to the beam prediction model being run on the terminal; or the performance monitoring request sent by the network device is received.

In some embodiments, in response to the beam prediction model being run on the terminal, the terminal may send a performance monitoring request to the network device. Alternatively, the terminal may receive the performance monitoring request sent by the network device.

For example, assuming the beam prediction model is run on the terminal, the terminal may send the performance monitoring request to the network device. It can be understood that the terminal decides to perform the performance monitoring of the beam prediction model. The terminal may also receive the performance monitoring request sent by the network device. It can be understood that the network device decides to perform the performance monitoring of the beam prediction model.

That is, when the beam prediction model is run on the terminal, the performance monitoring of the beam prediction model may be initiated by the terminal or by the network device.

In some embodiments, in response to the beam prediction model being run on the network device, the terminal may receive the performance monitoring request sent by the network device.

For example, assuming that the beam prediction model is run on the network device, the terminal may receive the performance monitoring request sent by the network device. It can be understood that the network device decides to perform the performance monitoring of the beam prediction model.

That is, when the beam prediction model is run on the network device, the performance monitoring of the beam prediction model is initiated by the network device.

In the present disclosure, the performance monitoring request can be sent to trigger the terminal to determine the model performance information, enabling the network device to monitor, based on the model performance indicator, the performance of the beam prediction model in a timely manner, thereby improving the accuracy of the beam prediction model for the beam prediction.

In the beam determination method provided in the embodiments of the present disclosure, in response to the performance monitoring request being sent by the terminal to the network device, determining the model performance information includes any one of the following: starting to determine the model performance information after a first time interval of sending the performance monitoring request; starting to determine the model performance information after a second time interval of receiving performance monitoring feedback information sent by the network device; and starting to determine the model performance information when a reference signal for model performance monitoring sent by the network device is received.

In some embodiments, in the case where the terminal sends the performance monitoring request to the network device, the terminal may start to determine the model performance information after a first time interval of sending the performance monitoring request.

For example, assuming that the first time interval is t1, the terminal may start to determine the model performance monitoring data and/or the model performance indicator after time t1 of sending the performance monitoring request. In some embodiments, determining the model performance monitoring data may include: starting to determine at least one piece of monitoring sample data during the monitoring time period; or starting to determine a piece of monitoring sample data, where the number of the piece of the monitoring sample data is the number of the monitoring sample; or starting to determine at least one piece of monitoring sample data before the reference time. It can be understood that, in response to the model performance indicator including the prediction accuracy, the average decibel difference, the decibel difference determined based on any one percentage point in the cumulative distribution function, and/or the average throughput difference, the model performance indicator may be determined after the start of determining the model performance monitoring data. In response to the model performance indicator including information such as the reference signal overhead and/or the uplink control information overhead, the model performance indicator may start to be determined after time t1 of sending the performance monitoring request.

In some embodiments, in the case where the terminal sends the performance monitoring request to the network device, the terminal may start to determine the model performance information after a second time interval of receiving performance monitoring feedback information sent by the network device.

For example, assuming that the second time interval is t2, the terminal may start to determine the model performance monitoring data and/or the model performance indicator after time t2 of receiving the performance monitoring feedback information sent by the network device. In some embodiments, determining the model performance monitoring data may include: starting to determine at least one piece of monitoring sample data during the monitoring time period; or starting to determine a piece of monitoring sample data, where the number of the piece of the monitoring sample data is the number of the monitoring sample; or starting to determine at least one piece of monitoring sample data before the reference time. It can be understood that, in response to the model performance indicator including the prediction accuracy, the average decibel difference, the decibel difference determined based on any one percentage point in the cumulative distribution function, and/or the average throughput difference, the model performance indicator may be determined after the start of determining the model performance monitoring data. In response to the model performance indicator including information such as the reference signal overhead and/or the uplink control information overhead, the model performance indicator may start to be determined after time t2 of receiving the performance monitoring feedback information sent by the network device.

It can be understood that the performance monitoring feedback information sent by the network device may be determined by the network device based on the performance monitoring request as received.

In some embodiments, in the case where the terminal sends the performance monitoring request to the network device, the terminal may start to determine the model performance information when the terminal receives a reference signal for model performance monitoring sent by the network device.

For example, the terminal may start to determine the model performance monitoring data and/or the model performance indicator when the terminal receives a reference signal for model performance monitoring sent by the network device. In some embodiments, determining the model performance monitoring data may include: starting to determine at least one piece of monitoring sample data during the monitoring time period; or starting to determine a piece of monitoring sample data, where the number of the piece of the monitoring sample data is the number of the monitoring sample; or starting to determine at least one piece of monitoring sample data before the reference time. It can be understood that, in response to the model performance indicator including the prediction accuracy, the average decibel difference, the decibel difference determined based on any one percentage point in the cumulative distribution function, and/or the average throughput difference, the model performance indicator may be determined after the start of determining the model performance monitoring data. In response to the model performance indicator including information such as the reference signal overhead and/or the uplink control information overhead, the model performance indicator may start to be determined when the reference signal for the model performance monitoring sent by the network device is received.

The present disclosure provides a plurality of types of manners for determining the model performance information by sending the performance monitoring request to the network device, facilitating the sending of the model performance information to the network device. This enables the network device to monitor, based on the model performance information, the performance of the beam prediction model in a timely manner, thereby improving the accuracy of the beam prediction model for the beam prediction.

In the beam determination method provided in the embodiments of the present disclosure, the first time interval is indicated by the network device; or the first time interval is indicated by the terminal; or the first time interval is a second default value.

In some embodiments, the first time interval is indicated by the network device.

In some embodiments, the first time interval is indicated by the terminal.

In some embodiments, the first time interval is a second default value. Herein, the second default value is preset, or specified in a protocol.

In the present disclosure, the first time interval is indicated by using different manners, facilitating the determination of the model performance information. This enables the network device to monitor, based on the model performance information, the performance of the beam prediction model in a timely manner, thereby improving the accuracy of the beam prediction model for the beam prediction.

In the beam determination method provided in the embodiments of the present disclosure, the second time interval is indicated by the network device, or the second time interval is a third default value.

In some embodiments, the second time interval is indicated by the network device.

In some embodiments, the second time interval is a third default value. Herein, the third default value is preset, or specified in a protocol.

In the present disclosure, the second time interval is indicated by using different manners, facilitating the determination of the model performance information. This enables the network device to monitor, based on the model performance information, the performance of the beam prediction model in a timely manner, thereby improving the accuracy of the beam prediction model for the beam prediction.

In the beam determination method provided in the embodiments of the present disclosure, in the case where the terminal sends the performance monitoring request to the network device, the terminal may start to determine the model performance information when the terminal receives a reference signal for model performance monitoring sent by the network device. The reference signal for the model performance monitoring includes: in response to the beam prediction model being a spatial domain prediction, the reference signal for the model performance monitoring is a reference signal used for beam monitoring sent by the network device by using each transmit beam; or in response to the beam prediction model being a time domain prediction, the reference signal for the model performance monitoring corresponds to a reference signal used for beam monitoring sent by the network device in each time period.

In some embodiments, in response to the beam prediction model being a spatial domain prediction, the reference signal for the model performance monitoring is a reference signal used for beam monitoring sent by the network device by using each transmit beam.

For example, when the beam prediction model is a spatial domain prediction, and when monitoring of the beam prediction model is required, the reference signal for the model performance monitoring needs to be sent based on all the transmit beams of the network device.

In some embodiments, in response to the beam prediction model being a time domain prediction, the reference signal for the model performance monitoring corresponds to the reference signal for beam measurement sent by the network device in each time period.

For example, when the beam prediction model is the time domain prediction, the network device is required to send the reference signal for beam measurement in each time period.

The present disclosure can be applicable to different modes of the beam prediction model, enabling the network device to monitor, based on the model performance information, the performance of the beam prediction model in a timely manner, thereby improving the accuracy of the beam prediction model for the beam prediction.

In the beam determination method provided in the embodiments of the present disclosure, the performance monitoring request sent by the terminal is carried by a scheduling request (SR), a second UL MAC CE, or a random access (RA).

In some embodiments, the performance monitoring request sent by the terminal is carried by an SR.

In some embodiments, the performance monitoring request sent by the terminal is carried by a second UL MAC CE.

In some embodiments, the performance monitoring request sent by the terminal is carried by an RA.

In the present disclosure, the performance monitoring request is carried by using different manners, facilitating the determination of the model performance information. This enables the network device to monitor, based on the model performance information, the performance of the beam prediction model in a timely manner, thereby improving the accuracy of the beam prediction model for the beam prediction.

In the beam determination method provided in the embodiments of the present disclosure, in response to the performance monitoring request sent by the network device being received, determining the model performance information includes starting to determine the model performance information after a third time interval of receiving the performance monitoring request sent by the network device.

In some embodiments, in the case where the terminal receives the performance monitoring request sent by the network device, determining the model performance information includes: starting to determine, by the terminal, the model performance information after a third time interval of receiving the performance monitoring request sent by the network device.

For example, assuming that the third time interval is t3, the terminal may start to determine the model performance monitoring data and/or the model performance indicator after time t3 of receiving the performance monitoring request sent by the network device. In some embodiments, determining the model performance monitoring data may include: starting to determine at least one piece of monitoring sample data during the monitoring time period; or starting to determine a piece of monitoring sample data, where the number of the piece of the monitoring sample data is the number of the monitoring sample; or starting to determine at least one piece of monitoring sample data before the reference time. It can be understood that, in response to the model performance indicator including the prediction accuracy, the average decibel difference, the decibel difference determined based on any one percentage point in the cumulative distribution function, and/or the average throughput difference, the model performance indicator may be determined after the start of determining the model performance monitoring data. In response to the model performance indicator including information such as the reference signal overhead and/or the uplink control information overhead, the model performance indicator may start to be determined after time t3 of receiving the performance monitoring request sent by the network device.

In the present disclosure, the model performance information is determined through receipt of the performance monitoring request sent by the network device, facilitating the sending of the model performance information to the network device. This enables the network device to monitor, based on the model performance information, the performance of the beam prediction model in a timely manner, thereby improving the accuracy of the beam prediction model for the beam prediction.

In the beam determination method provided in the embodiments of the present disclosure, the third time interval is indicated by the network device, or the third time interval is a fourth default value.

In some embodiments, the third time interval is indicated by the network device.

In some embodiments, the third time interval is a fourth default value. Herein, the fourth default value is preset, or specified in a protocol.

In the present disclosure, the third time interval is indicated by using different manners, facilitating the determination of the model performance information. This enables the network device to monitor, based on the model performance information, the performance of the beam prediction model in a timely manner, thereby improving the accuracy of the beam prediction model for the beam prediction.

In the beam determination method provided in the embodiments of the present disclosure, the performance monitoring request received by the terminal is carried by a second RRC, a downlink (DL) MAC CE, a paging, or downlink control information (DCI).

In some embodiments, the performance monitoring request received by the terminal is carried by a second RRC.

In some embodiments, the performance monitoring request received by the terminal is carried by a DL MAC CE.

In some embodiments, the performance monitoring request received by the terminal is carried by a paging.

In some embodiments, the performance monitoring request received by the terminal is carried by a DCI.

For example, the performance monitoring request received by the terminal is carried by a DCI for scheduling a PUSCH.

In the present disclosure, the performance monitoring request is carried by using different manners, facilitating the determination of the model performance information. This enables the network device to monitor, based on the model performance information, the performance of the beam prediction model in a timely manner, thereby improving the accuracy of the beam prediction model for the beam prediction.

In the beam determination method provided in the embodiments of the present disclosure, FIG. 7 is a flowchart of yet another model performance monitoring method illustrated according to an exemplary embodiment. As shown in FIG. 7, in response to the beam prediction model being run on the terminal, the method may further include the following step S61.

At step S61, model status indication information sent by the network device is received.

In some embodiments, in response to the beam prediction model being run on the terminal, the terminal may receive the model status indication information sent by the network device. In some embodiments, the model status indication information includes at least one of the following: model activation indication information; model deactivation indication information; model switching indication information; model tuning indication information; and indication information for switching to a non-artificial intelligence (AI) mode. The model tuning indication may be used for indicating tuning on the beam prediction model, such as fine-tuning.

It can be understood that the model status indication information sent by the network device may be determined by the network device based on the model performance information. That is, the network device determines, based on the model performance information, which status indications to perform on the beam prediction model. For example, the network device determines, based on the model performance information, whether activation, deactivation, switching and/or fine-tuning is performed on the beam prediction model. In some embodiments, the indication information for switching to the non-AI mode is used for indicating switching the manner in which beam information is obtained. For example, the AI mode indicates that the beam information is obtained by using the beam prediction model. The non-AI mode indicates that the beam information is not obtained based on the beam prediction model, but rather that the beam information is obtained based on conventional measurement.

In some embodiments, the model status indication information is carried by the second DCI, the second DL MAC CE, and/or the third RRC.

For example, the model status indication information is carried by the second DCI.

As another example, the model status indication information is carried by the second DL MAC CE.

As another example, the model status indication information is carried by the third RRC.

In some embodiments, the third RRC indicates a correspondence of a plurality of model parameter indexes to model parameters. The second DCI and/or the second DL MAC CE is used for indicating the model parameter index.

For example, the third RRC indicates the correspondence of the plurality of model parameter indexes to specific model parameters, and the second DCI and/or the second DL MAC CE is used for indicating the model parameter index.

In some embodiments, the third RRC indicates the correspondence of the plurality of model parameter indexes to model parameters. The second DL MAC CE is used for activating a portion of the plurality of model parameter indexes. The second DCI is used for indicating a model parameter index in the portion of the model parameter indexes.

For example, the third RRC indicates the correspondence of the plurality of model parameter indexes to specific model parameters. The second DL MAC CE is used for activating a portion of the plurality of model parameter indexes. The second DCI is used for indicating a model parameter index of the portion of the model parameter indexes activated by the second DL MAC CE.

In some embodiments, the model status indication information is used for indicating a model parameter index, a model parameter, a model index, or a model version index.

For example, the model status indication information is used for indicating a model parameter index.

As another example, the model status indication information is used for indicating a specific model parameter.

As another example, the model status indication information is used for indicating a model index.

As another example, the model status indication information is used for indicating a model version index.

In some embodiments, the model index includes indexes of beam prediction models with different functions; or in the beam prediction models with the same function, different versions or different model parameter configurations correspond to indexes of different beam prediction models.

For example, the model index includes different indexes corresponding to models with different functions. For different functions, for example, some models are used for the channel state information (CSI) compression, some models are used for the beam prediction, and some models are used for the positioning prediction.

As another example, different model indexes may indicate different versions of beam prediction models with the same function, or indicate different beam prediction models corresponding to different parameter configurations with the same function.

In some embodiments, in response to the beam prediction models with the same function corresponding to the same model index, the model version index includes: indexes of beam prediction models of different versions with the same function, or indexes of beam prediction models of different model parameter configurations with the same function.

For example, the model version index means that if the beam prediction models with the same function correspond to the same model index, beam prediction models of different versions with the same function, or beam prediction models of different parameter configurations with the same function may be distinguished by using the model version index.

In some embodiments, when the terminal receives the model status indication information including the model deactivation indication information, the terminal may terminate predicting beams by using the beam prediction model. The terminal may subsequently measure the beams included in the first beam set or the second beam set by using a conventional manner.

In the present disclosure, the beam prediction model can be adjusted in a timely manner through the model status indication information sent by the network device, which improves the accuracy of the beam prediction model for the beam prediction.

It can be understood that in each of the embodiments depicted in FIGS. 2 to 6 above, if the device on which the beam prediction model is run is not explicitly indicated, the beam prediction model may be run on the terminal or the network device, which is not limited in the present disclosure. It should be clear to those skilled in the art that the beam prediction model involved in the present disclosure being located on the terminal, the beam prediction model being run on the terminal, and the beam prediction model running on the terminal all convey the same meaning that the beam prediction model is on the terminal. Similarly, the beam prediction model involved in the present disclosure being located on the network device, the beam prediction model being run on the network device, and the beam prediction model running on the network device all convey the same meaning that the beam prediction model is on the network device.

Next, in some embodiments of the present disclosure, an implementation process of the beam prediction model for the beam prediction is provided.

In some embodiments, for the case where the beam prediction model is a spatial domain prediction, the terminal measures the L1-RSRP of set B, and input the L1-RSRP of set B to the beam prediction model. The beam prediction model may predict the L1-RSRP of set A.

In this embodiment, the relationship between set B and set A includes two kinds as follows.

The first relationship is that set B is a subset of set A. For example, set A includes 32 reference signals (each reference signal corresponds to a beam direction), then set B includes a portion of the 32 reference signals, e.g., set B includes 8 reference signals of the 32 reference signals.

The second relationship is that set B is a wide beam, and set A is a narrow beam. For example, set A includes 32 reference signals (each reference signal corresponds to a beam direction, and the 32 reference signals cover a 120 degree direction). Set B includes another Y reference signals, for example, Y=8. These Y reference signals also cover a 120 degree direction, i.e., the beam direction of each reference signal in set B covers the beam direction of a plurality of reference signals in set A. It can be understood that the relationship between 32/N reference signals in set A and the same reference signal in set B is QCL Type D.

In some embodiments, if there is no need to monitor the performance of the beam prediction model, assuming that the AI model has been trained in advance, then the network device only needs to send the reference signal of set B periodically (e.g., a first period). Then, the terminal measures the L1-RSRP of the reference signal in set B, and inputs the L1-RSRP of the reference signal in set B to the beam prediction model. In this way, the L1-RSRP of set A is output, or the IDs of one or more strongest reference signals of the 32 reference signals in set A are output.

In some embodiments, if the performance of the beam prediction model needs to be monitored, the network device is required to send the reference signal of set A periodically (e.g., a second period). Then, the terminal side measures only the L1-RSRP of the reference signal of set B, and inputs the measured L1-RSRP of the reference signal of set B to the beam prediction model, thereby obtaining the predicted beam information. The terminal reports the predicted beam information to the network device. At the same time, the terminal also measures the L1-RSRPs of all the reference signals in set A, and reports the measured L1-RSRPs of all the reference signals in set A to the base station as the beam information obtained by using the conventional manner.

It can be understood that the second period is greater than the first period, or the second period is a multiple of the first period. The present disclosure does not limit how much greater the second period than the first period.

In some embodiments, for the case where the beam prediction model is a time domain prediction, the terminal measures the L1-RSRP of set B at a historical time, and inputs the L1-RSRP of set B at the historical time to the beam prediction model for predicting the L1-RSRP of set A at a future timepoint. In addition to the two relationships described above, there is another relationship between set B and set A in which set B is the same as set A.

If the beam prediction is performed based on the beam prediction model, the L1-RSRP of the reference signal at the future timepoint corresponding to the terminal measurement is possible to be not sent. For example, the performance monitoring of the beam prediction model is not required. Assuming that the beam prediction model is located on the terminal, based on the beam information output by the beam prediction model, the terminal needs to report the beam information output by the beam prediction model to the base station.

If the beam measurement is performed by using a conventional manner, the reference signal at the future timepoint also needs to be sent by the terminal. The terminal measures the reference signal at the future timepoint, and reports the measured beam information to the base station.

Based on the same idea, the present disclosure also provides a model performance monitoring method performed at the network device side.

FIG. 8 is a flowchart of a further model performance monitoring method illustrated according to an exemplary embodiment. As shown in FIG. 8, the method is applied to a network device, and may include the following step S71.

At step S71, model performance information sent by a terminal is received.

In some embodiments, the network device receives the model performance information sent by the terminal. The model performance information may be beam information corresponding to some beams. The model performance information may be used for monitoring a beam prediction model to determine performance of the beam prediction model.

In the present disclosure, the model performance information sent by the terminal is received, enabling the network device to monitor, based on the model performance information, the performance of the beam prediction model in a timely manner, thereby improving the accuracy of the beam prediction model for the beam prediction.

In the beam determination method provided in the embodiments of the present disclosure, the model performance information includes model performance monitoring data and/or a model performance indicator.

In some embodiments, the model performance information may include model performance monitoring data. The model performance monitoring data may be beam information of a corresponding beam monitored by the terminal.

In response to the beam prediction model being located at the terminal side, the model performance monitoring data determined by the terminal may include one or more of the following: beam information of a portion of or all of the beams obtained through actual measurement performed by the terminal, and beam information of a portion of or all of the beams obtained through the prediction performed by the beam prediction model. Of course, the model performance monitoring data may also include any other information used for model monitoring, which is not limited in the present disclosure.

In response to the beam prediction model being located at the network device side, the model performance monitoring data may include beam information of a portion of or all of the beams obtained through actual measurement performed by the terminal, and any other information used for model monitoring, which is not limited in the present disclosure.

In some embodiments, the model performance information may include a model performance indicator. In some embodiments, the model performance indicator may reflect, to a certain extent, the performance of the beam prediction model. The model performance indicator may or may not be obtained based on the model performance monitoring data.

For example, if the beam prediction model is located at the network device side, the model performance information as received may include the model performance monitoring data, but does not include the model performance indicator. As another example, the network device may determine the model performance indicator based on the model performance monitoring parameter sent by the terminal.

In the present disclosure, the beam prediction model can be monitored through the model performance monitoring data and/or the model performance indicator, enabling the network device to monitor, based on the model performance monitoring data and/or the model performance indicator, the performance of the beam prediction model in a timely manner, thereby improving the accuracy of the beam prediction model for the beam prediction.

In the beam determination method provided in the embodiments of the present disclosure, in response to the model performance information including the model performance monitoring data, the model performance monitoring data includes at least one of the following: at least one piece of monitoring sample data during a monitoring time period; a piece of monitoring sample data, where the number of the piece of the monitoring sample data is the number of the monitoring sample; and at least one piece of monitoring sample data before a reference time.

In some embodiments, the model performance monitoring data may include at least one piece of monitoring sample data during a monitoring time period.

For example, the monitoring time period may be denoted as T, and the model performance monitoring data may be at least one piece of monitoring sample data included in the T time period. Assuming that C pieces of monitoring sample data are included in the T time period, the model performance monitoring data may be C pieces of monitoring sample data included in the T time period, or the model performance monitoring data may be D pieces of monitoring sample data included in the T time period. Herein, the D pieces of monitoring sample data is a portion of monitoring sample data in the C pieces of monitoring sample data.

For example, the value of D may be the number of times the reference signal for beam measurement is sent included in the T time period, and may also be understood as the number of periods. The period is indicated as the period for which the reference signal for beam measurement is sent. It can be understood that the network device may send a plurality of reference signals in each period for use in beam measurement. Each reference signal is sent once in each period.

It can be understood that whether C pieces of monitoring sample data or D pieces of monitoring sample data are selected specifically may be preset, or indicated by the terminal, or indicated by the network device, which is not limited in the present disclosure.

In some embodiments, the model performance monitoring data may include a piece of monitoring sample data, where the number of the piece of the monitoring sample data is the number of the monitoring sample.

For example, the number of the monitoring sample may be denoted as N, and the model performance monitoring data may be N pieces of monitoring sample data. Herein, N may be preset, or indicated by the terminal, or indicated by the network device, which is not limited in the present disclosure.

In some embodiments, the model performance monitoring data may include at least one piece of monitoring sample data before a reference time.

For example, the model performance monitoring data may include E pieces of monitoring sample data before the reference time. It can be understood that the monitoring sample data before the reference time may include a plurality of pieces of monitoring sample data, and the E pieces of monitoring sample data are a portion of monitoring sample data in the plurality of pieces of the monitoring sample data. In some embodiments, the reference time and the value of E may be preset, or indicated by the terminal, or indicated by the network device, which is not limited in the present disclosure.

In the present disclosure, different pieces of monitoring sample data are provided as the model performance monitoring data, facilitating the network device to monitor, based on the model performance monitoring data, the performance of the beam prediction model in a timely manner, thereby improving the accuracy of the beam prediction model for the beam prediction.

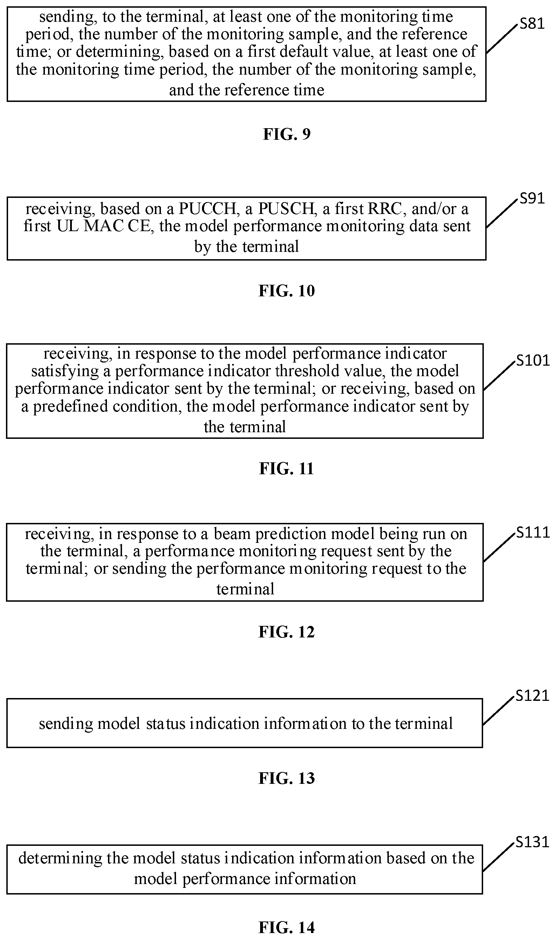

In the beam determination method provided in the embodiments of the present disclosure, FIG. 9 is a flowchart of another model performance monitoring method illustrated according to an exemplary embodiment. As shown in FIG. 9, the method may include the following step S81.

At step S81, at least one of the monitoring time period, the number of the monitoring sample, and the reference time is sent to the terminal; or at least one of the monitoring time period, the number of the monitoring sample, and the reference time is determined based on a first default value.

In some embodiments, the network device may send to the terminal at least one of the following: the monitoring time period, the number of the monitoring sample, and the reference time.

In some embodiments, the network device may determine, based on a first default value, at least one of the following: the monitoring time period, the number of the monitoring sample, and the reference time. In some embodiments, the first default value may be preset or specified in a protocol, which is not limited in the present disclosure.

In the present disclosure, the model performance monitoring data is determined through at least one of the monitoring time period, the number of monitoring samples, and the reference time, enabling the network device to monitor, based on the model performance monitoring data, the performance of the beam prediction model in a timely manner, thereby improving the accuracy of the beam prediction model for the beam prediction.

In the beam determination method provided in the embodiments of the present disclosure, in response to at least one of the monitoring time period, the number of the monitoring sample, and the reference time being sent to the terminal, at least one of the monitoring time period, the number of the monitoring sample, and the reference time is carried in a terminal dedicated signaling or a broadcast signaling.

In some embodiments, the network device may send to the terminal the UE dedicated signaling or the broadcast signaling, and determine indication information carried in the UE dedicated signaling or the broadcast signaling. The indication information may indicate at least one of the monitoring time period, the number of the monitoring sample, and the reference time.

In the present disclosure, at least one of the monitoring time period, the number of the monitoring sample, and the reference time can be indicated through the UE dedicated signaling or the broadcast signaling, facilitating the indication for the terminal to determine the model performance monitoring data based on at least one of the monitoring time period, the number of the monitoring sample, and the reference time. This enables the network device to monitor, based on the model performance monitoring data, the performance of the beam prediction model in a timely manner, thereby improving the accuracy of the beam prediction model for the beam prediction.

In the beam determination method provided in the embodiments of the present disclosure, in response to the beam prediction model being run on the terminal, the monitoring sample data includes at least one of the following:
first beam information in a first beam set obtained by the terminal based on an output of the beam prediction model, where an input to the beam prediction model includes second beam information of a second beam set measured by the terminal; and the second beam set is a subset of the first beam set, or a beam in the second beam set is capable of covering a plurality of beams in the first beam set, or the first beam set is the same as the second beam set;
third beam information in the first beam set measured by the terminal; and
a timestamp corresponding to the monitoring sample data.

In some embodiments, in response to the beam prediction model being run on the terminal, the monitoring sample data may include the first beam information in the first beam set obtained by the terminal based on the output of the beam prediction model.

It can be understood that the input to the beam prediction model may include the second beam information in the second beam set measured by the terminal. That is, the beam prediction model may predict, through the second beam information of the second beam set measured by the terminal, the first beam information in the first beam set. In some embodiments, the second beam set may be a subset of the first beam set; or a beam in the second beam set is capable of covering a plurality of beams in the first beam set; or the first beam set is the same as the second beam set. It should be understood that in the case where the first beam set is the same as the second beam set, the beam prediction model may be thought of as predicting beam information at a future time by using beam information at a historical time.

For example, the first beam set may be denoted as set A, and the second beam set may be denoted as set B.

It can be understood that a portion of the first beam information in the first beam set may be the beam information actually measured by the terminal, and another portion of the first beam information in the first beam set may be the beam information predicted by the beam prediction model.

For example, the first beam information in the first beam set may be the beam information of all the beams output by the beam prediction model. Herein, the all the beams may be all the beams included in set A. As another example, the first beam information in the first beam set may be the beam information of K preferred beams. In some embodiments, the K preferred beams may be beams whose beam quality is determined to satisfy a condition based on the output of the beam prediction model. For example, it may be determined that when a beam quality of a beam satisfies a beam quality threshold, the beam may be determined as a preferred beam. Alternatively, the beams may be ranked from high to low based on the beam quality, and the first K beams are selected as the preferred beams. It can be understood that the specific determination manner of the preferred beam is not limited in the present disclosure.

The beam involved in the present disclosure is a beam. Performing beam measurement may be measuring a reference signal, thereby measuring an L1-RSRP and/or an L1-SINR corresponding to the reference signal. In some embodiments, the reference signal may include an SSB, a CSI-RS, and/or an SRS. The beam indication for the beam may be an indication of a TCI state. The TCI may be used for informing the terminal that the beam for use in receiving a PDCCH and/or its DMRS, and a PDSCH and/or its DMRS is the receive beam that is the same one for receiving which SSB or CSI-RS sent by the network device; or the TCI may be used for informing the terminal that the beam for use in sending a PUCCH and/or its DMRS, and a PUSCH and/or its DMRS is the transmit beam corresponding to the receive beam that is the same one for receiving which SSB or CSI-RS sent by the network device, or the transmit beam that is the same one for sending which SRS by the terminal device.

In some embodiments, the TCI state includes at least one QCL type, such as QCL Type A, QCL Type B, QCL Type C, and QCL Type D. In some embodiments, QCL Type D is receive parameter information, which may be commonly referred to as a beam. QCL Type A, QCL Type B, and QCL Type C include at least one of the following: a Doppler shift, a Doppler spread, an average time delay, and a time delay spread related parameter. For an uplink beam, the beam indication may be spatial relation information, spatial filter information, or an uplink TCI state.

In some embodiments, in response to the beam prediction model being run on the terminal, the monitoring sample data may include the third beam information in the first beam set measured by the terminal.

For example, the third beam information in the first beam set may be the beam information of all the beams included in set A. As another example, the third beam information in the first beam set may be the beam information of K' preferred beams. In some embodiments, the K' preferred beams may be beams whose beam quality determined by the terminal through measurement satisfies a condition. Alternatively, the beams may be ranked from high to low based on the beam quality, and the first K' beams are selected as the preferred beams.

It can be understood that K' and K may be the same or different. Of course, even if the values of K' and K are the same, the beam identification and/or its beam quality corresponding to the beam information included in the third beam information may be different from the beam identification and/or its beam quality corresponding to the beam information included in the first beam information. For example, the beam identification included in the first beam information is transmit beam 1 and/or receive beam 2, while the beam identification included in the third beam information is transmit beam 3 and/or receive beam 4. Alternatively, even if the first beam information and the third beam information both include transmit beam 1 and/or receive beam 2, their corresponding beam qualities may be different. For example, the beam quality corresponding to transmit beam 1 and/or receive beam 2 included in the first beam information is X dB, while the beam quality corresponding to transmit beam 1 and/or receive beam 2 included in the third beam information is Y dB. In some embodiments, the transmit beam is the transmit beam corresponding to the network device, and may be characterized by a reference signal identification. The receive beam is the receive beam corresponding to the terminal.

It should be noted that the third beam information in the first beam set is the beam information actually measured by the terminal. For example, the third beam information in the first beam set is measured by using a conventional manner.

It can be understood that through the above-described first beam information in the first beam set obtained by the terminal based on the output of the beam prediction model, and the third beam information in the first beam set measured by the terminal, the network device can compare the first beam information obtained by the terminal based on the output of the beam prediction model with the third beam information obtained through actual measurement performed by the terminal, thereby monitoring the performance of the beam prediction model run on the terminal.

In some embodiments, in response to the beam prediction model being run on the terminal, the monitoring sample data may include a timestamp corresponding to the monitoring sample data.

It can be understood that the timestamp is used for indicating a monitoring time of the monitoring sample data.

The present disclosure provides a plurality of types of monitoring sample data as the model performance monitoring data. This enables the network device to monitor, based on the model performance monitoring data, the performance of the beam prediction model in a timely manner, thereby improving the accuracy of the beam prediction model for the beam prediction.

In the beam determination method provided in the embodiments of the present disclosure, in response to the beam prediction model being run on the network device, the monitoring sample data includes at least one of the following:
second beam information of a second beam set measured by the terminal, where an input to the beam prediction model includes the second beam information of the second beam set measured by the terminal, and an output of the beam prediction model includes first beam information in a first beam set; and the second beam set is a subset of the first beam set, or a beam in the second beam set is capable of covering a plurality of beams in the first beam set, or the first beam set is the same as the second beam set;
third beam information in the first beam set measured by the terminal; and
a timestamp corresponding to the monitoring sample data.

In some embodiments, in response to the beam prediction model being run on the network device, the monitoring sample data may include the second beam information in the second beam set obtained by the terminal through measurement.

It can be understood that the input to the beam prediction model may include the second beam information of the second beam set measured by the terminal, and the output of the beam prediction model includes the first beam information in the first beam set. That is, the beam prediction model may predict, through the second beam information of the second beam set measured by the terminal, the first beam information in the first beam set. In some embodiments, the second beam set may be a subset of the first beam set; or a beam in the second beam set is capable of covering a plurality of beams in the first beam set; or the first beam set is the same as the second beam set. It should be understood that in the case where the first beam set is the same as the second beam set, the beam prediction model may be thought of as predicting beam information at a future time by using beam information at a historical time.

It should be noted that the second beam information in the second beam set is the beam information actually measured by the terminal. For example, the second beam information in the second beam set is measured by using a conventional manner.

In some embodiments, in response to the beam prediction model being run on the network device, the monitoring sample data may include the third beam information in the first beam set measured by the terminal.

For example, the third beam information in the first beam set may be the beam information of all the beams included in set A. As another example, the third beam information in the first beam set may be the beam information of K' preferred beams. In some embodiments, the K' preferred beams may be beams whose beam quality determined by the terminal through measurement satisfies a condition. Alternatively, the beams may be ranked from high to low based on the beam quality, and the first K' beams are selected as the preferred beams.

It should be noted that the third beam information in the first beam set is the beam information actually measured by the terminal. For example, the third beam information in the first beam set is measured by using a conventional manner.

It can be understood that through the above-described second beam information of the second beam set measured by the terminal, and the third beam information in the first beam set measured by the terminal, the network device can obtain, by performing the beam prediction based on the second beam information of the second beam set and the beam prediction model, the first beam information in the first beam set output by the beam prediction model. And the network device compares the first beam information obtained through the output of the beam prediction model with the third beam information obtained through actual measurement performed by the terminal, thereby monitoring the performance of the beam prediction model run on the network device.

In some embodiments, in response to the beam prediction model being run on the network device, the monitoring sample data may include a timestamp corresponding to the monitoring sample data.

It can be understood that the timestamp is used for indicating a monitoring time of the monitoring sample data.

The present disclosure provides a plurality of types of monitoring sample data as the model performance monitoring data. This enables the network device to monitor, based on the model performance monitoring data, the performance of the beam prediction model in a timely manner, thereby improving the accuracy of the beam prediction model for the beam prediction.

In the beam determination method provided in the embodiments of the present disclosure, the first beam information includes at least one of the following: a first beam identification corresponding to at least one beam in the first beam set, an L1-RSRP corresponding to a beam indicated by the first beam identification, and an L1-SINR corresponding to the beam indicated by the first beam identification. The second beam information includes at least one of the following: a second beam identification corresponding to at least one beam in the second beam set, an L1-RSRP corresponding to a beam indicated by the second beam identification, and an L1-SINR corresponding to the beam indicated by the second beam identification. The third beam information includes at least one of the following: a third beam identification corresponding to at least one beam in the first beam set, an L1-RSRP corresponding to a beam indicated by the third beam identification, and an L1-SINR corresponding to the beam indicated by the third beam identification.

The identification involved in the present disclosure may, for example, be an ID or an index.

In some embodiments, the first beam information includes at least one of the following: a first beam identification corresponding to at least one beam in the first beam set, an L1-RSRP corresponding to a beam indicated by the first beam identification, and/or an L1-SINR corresponding to the beam indicated by the first beam identification. For example, the at least one beam in the first beam set involved in the first beam information may be all the beams included in set A or K preferred beams included in set A. It can be understood that the L1-RSRP and/or the L1-SINR corresponding to the beam indicated by the first beam identification involved in the first beam information may be obtained through monitoring performed by the terminal, or may be predicted by the beam prediction model. This is because a portion of the beam information corresponding to all the beams output by the beam prediction model corresponds to the beam information input to the beam prediction model, and another portion of the beam information corresponding to all the beams output by the beam prediction model is predicted by the beam prediction model.

In some embodiments, the first beam information includes a first beam identification corresponding to at least one beam in the first beam set. For example, the at least one beam in the first beam set involved in the first beam information may be all the beams included in set A or K preferred beams included in set A.

In some embodiments, the first beam information includes a beam quality corresponding to a beam indicated by the first beam identification. The beam quality may include an L1-RSRP and/or an L1-SINR. For example, the first beam information includes the beam qualities of all the beams in the first beam set, but does not include the first beam identification.

In some embodiments, the second beam information includes at least one of the following: a second beam identification corresponding to at least one beam in the second beam set, an L1-RSRP corresponding to a beam indicated by the second beam identification, and an L1-SINR corresponding to the beam indicated by the second beam identification. For example, the at least one beam in the second beam set may be all the beams or a portion of the beams in the second beam set. Typically, the at least one beam in the second beam set may be all the beams in the second beam set. It can be understood that the beam in the second beam set is the beam to be input to the beam prediction model for performing the beam prediction.

In some embodiments, the second beam information includes a second beam identification corresponding to at least one beam in the second beam set. For example, the at least one beam in the second beam set involved in the second beam information may be all the beams included in set B.

In some embodiments, the second beam information includes a beam quality corresponding to a beam indicated by the second beam identification. The beam quality may include an L1-RSRP and/or an L1-SINR. For example, the second beam information includes the beam qualities of all the beams in the second beam set, but does not include the second beam identification.

In some embodiments, the third beam information includes at least one of the following: a third beam identification corresponding to at least one beam in the first beam set, an L1-RSRP corresponding to a beam indicated by the third beam identification, and an L1-SINR corresponding to the beam indicated by the third beam identification. For example, the at least one beam in the first beam set involved in the third beam information may be all the beams included in set A or K' preferred beams included in set A. It can be understood that the L1-RSRP and/or the L1-SINR corresponding to the beam indicated by the third beam identification involved in the third beam information may be obtained through monitoring performed by the terminal.

In some embodiments, the third beam information includes a third beam identification corresponding to at least one beam in the first beam set. For example, the at least one beam in the first beam set involved in the third beam information may be all the beams included in set A or K' preferred beams included in set A.

In some embodiments, the third beam information includes a beam quality corresponding to a beam indicated by the third beam identification. The beam quality may include an L1-RSRP and/or an L1-SINR. For example, the third beam information includes the beam qualities of all the beams in the first beam set, but does not include the third beam identification.

In the present disclosure, by using the beam identifications corresponding to different beams, and the L1-RSRP and/or the L1-SINR of the respective beam as different monitoring sample data, the network device is enabled to monitor, based on the model performance monitoring data including the monitoring sample data, the performance of the beam prediction model in a timely manner, thereby improving the accuracy of the beam prediction model for the beam prediction.

In the beam determination method provided in the embodiments of the present disclosure, the timestamp of the monitoring sample includes any of the following: a monitoring time of the monitoring sample data; and a universal interval time, where the universal interval time is used for indicating a time interval between two adjacent pieces of the monitoring sample data.

In some embodiments, the timestamp of the monitoring sample may be a monitoring time of the monitoring sample data. For example, the timestamp of the monitoring sample may be indicated in an explicit manner. That is, the timestamp of the monitoring sample directly indicates the monitoring time of the corresponding monitoring sample data. The monitoring time may also be understood as a collection time of the corresponding sample of the monitoring sample data.

In some embodiments, the timestamp of the monitoring sample may be a universal interval time. Herein, the universal interval time is used for indicating a time interval between two adjacent pieces of the monitoring sample data.

For example, the timestamp of the monitoring sample may be indicated in an implicit manner. That is, the universal interval time indicates that each piece of monitoring sample data corresponds to the same time period length; the universal interval time may also be understood as the universal interval time indicating that two adjacent pieces of monitoring sample data are provided with the same time period length. In this embodiment, each piece of monitoring sample data is saved in the model performance monitoring data in chronological order. Thus, the monitoring time of each piece of monitoring sample data may be indirectly determined based on the universal interval time.

It can be understood that when the timestamp of the monitoring sample is indicated in an explicit or implicit manner, a monitoring time of one piece of monitoring sample data may be at least included, such as the monitoring time of the first piece of monitoring sample data.

In the present disclosure, the timestamp of the monitoring sample is indicated in an explicit or implicit manner, enabling the network device to monitor, based on the monitoring sample data including the time information, the performance of the beam prediction model in a timely manner, thereby improving the accuracy of the beam prediction model for the beam prediction.

In the beam determination method provided in the embodiments of the present disclosure, FIG. 10 is a flowchart of yet another model performance monitoring method illustrated according to an exemplary embodiment. As shown in FIG. 10, receiving the model performance information sent by the terminal at S71 may include the following step S91.

At step S91, the model performance monitoring data sent by the terminal is received based on a PUCCH, a PUSCH, a first RRC, and/or a first ULMAC CE.

In some embodiments, the network device may receive, based on the PUCCH, the PUSCH, the first RRC, and/or the first ULMAC CE, the model performance monitoring data sent by the terminal.

In the present disclosure, the model performance monitoring parameter can be sent through the PUCCH, the PUSCH, the first RRC, and/or the first UL MAC CE, enabling the network device to monitor, based on the model performance monitoring data, the performance of the beam prediction model in a timely manner, thereby improving the accuracy of the beam prediction model for the beam prediction.

In the beam determination method provided in the embodiments of the present disclosure, in response to the beam prediction model being run on the terminal, the model performance information includes the model performance indicator; or in response to the beam prediction model being run on the network device, the model performance indicator is determined based on the model performance monitoring data. In some embodiments, the model performance indicator includes at least one of the following: a prediction accuracy; an average decibel difference; a decibel difference determined based on any one percentage point in a cumulative distribution function; an average throughput difference; a reference signal overhead or a reference signal overhead reduction rate; and an uplink control information overhead.

It can be understood that if the beam prediction model is run on the terminal, the model performance information received by the network device may include the model performance indicator. If the beam prediction model is run on the network device, the network device may determine the model performance indicator based on the model performance monitoring data as received.

In some embodiments, the model performance indicator may include a prediction accuracy.

For example, the prediction accuracy may be used for indicating a probability for a correct prediction. The correct prediction means that the K best reference signal identifications predicted by the beam prediction model include the K' best reference signal identifications determined through measurement performed by the terminal. In some embodiments, the identification may be an ID or an index. In some embodiments, the reference signal ID may be, for example, an SSB ID, a CSI-RS ID, or an SRS ID. It can be understood that K and K' are positive integers greater than or equal to 1.

It can be understood that the best reference signal identification corresponds to the beam with the strongest L1-RSRP or the strongest L1-SINR of the reference signal.

The prediction accuracy may be determined based on prediction results of a plurality of predictions, and each prediction result may be a correct prediction or an incorrect prediction. For example, if the K best reference signal identifications predicted by the beam prediction model at the time of this prediction include the K' best reference signal identifications determined through measurement performed by the terminal, it is indicated that this prediction is correct. As another example, if the K best reference signal identifications predicted by the beam prediction model at the time of this prediction do not include the K' best reference signal identifications determined through measurement performed by the terminal, or do not fully include the K' best reference signal identifications determined through measurement performed by the terminal, it is indicated that this prediction is incorrect. The prediction accuracy is the probability that the predictions of a plurality of predictions are correct.

In some embodiments, the model performance indicator may include an average decibel difference. In some embodiments, the average decibel difference may also be referred to as an average L1-RSRP difference, or a dB difference.

For example, the average decibel difference may include at least one of the following: a difference between any two of the first L1-RSRP, the second L1-RSRP, the third L1-RSRP, and the fourth L1-RSRP; or an average value of a plurality of times of differences between any two of the first L1-RSRP, the second L1-RSRP, the third L1-RSRP, and the fourth L1-RSRP.

In some embodiments, the first L1-RSRP is the L1-RSRP measured by the terminal corresponding to the best reference signal identification predicted by the beam prediction model. The second L1-RSRP is the L1-RSRP measured by the terminal corresponding to the best reference signal identification measured by the terminal. The third L1-RSRP is the L1-RSRP predicted by the beam prediction model corresponding to the best reference signal identification predicted by the beam prediction model. The fourth L1-RSRP is the L1-RSRP predicted by the beam prediction model corresponding to the best reference signal identification measured by the terminal.

For example, the average decibel difference may be a difference between the actual L1-RSRP corresponding to the best reference signal identification predicted by the beam prediction model and the actual L1-RSRP corresponding to the actual best reference signal identification measured by the terminal. Or, the average decibel difference may be an average value of a plurality of times of differences between the actual L1-RSRP corresponding to the best reference signal identification predicted by the beam prediction model and the actual L1-RSRP corresponding to the actual best reference signal identification measured by the terminal.

As another example, the average decibel difference may be a difference between the predicted L1-RSRP corresponding to the best reference signal identification predicted by the beam prediction model and the actual L1-RSRP corresponding to the best reference signal identification predicted by the beam prediction model. Or, the average decibel difference may be an average value of a plurality of times of differences between the predicted L1-RSRP corresponding to the best reference signal identification predicted by the beam prediction model and the actual L1-RSRP corresponding to the best reference signal identification predicted by the beam prediction model.

As yet another example, the average decibel difference may be a difference between the actual L1-RSRP corresponding to the best reference signal identification predicted by the beam prediction model and the predicted L1-RSRP corresponding to the best reference signal identification predicted by the beam prediction model. Or, the average decibel difference may be an average value of a plurality of times of differences between the actual L1-RSRP corresponding to the best reference signal identification predicted by the beam prediction model and the predicted L1-RSRP corresponding to the best reference signal identification predicted by the beam prediction model.

As another example, the average decibel difference may be the difference between the actual L1-RSRP corresponding to the actual best reference signal identification measured by the terminal and the predicted L1-RSRP corresponding to the actual best reference signal identification measured by the terminal. Or, the average decibel difference may be an average value of a plurality of times of differences between the actual L1-RSRP corresponding to the actual best reference signal identification measured by the terminal and the predicted L1-RSRP corresponding to the actual best reference signal identification measured by the terminal.

It can be understood that the difference between any two of the first L1-RSRP, the second L1-RSRP, the third L1-RSRP, and the fourth L1-RSRP may also be used as the average decibel difference; or an average value of a plurality of times of differences between any two of the first L1-RSRP, the second L1-RSRP, the third L1-RSRP, and the fourth L1-RSRP may also be used as the average decibel difference.

In some embodiments, the model performance indicator may include a decibel difference determined based on any one percentage point in a cumulative distribution function (CDF).

For example, the CDF may be a corresponding L1-RSRP difference CDF curve obtained based on a plurality of times of differences between any two of the first L1-RSRP, the second L1-RSRP, the third L1-RSRP, and the fourth L1-RSRP. The model performance indicator may be the corresponding L1-RSRP difference at a certain percentage point in the L1-RSRP difference CDF curve.

As another example, the CDF may be a CDF curve obtained based on a difference between the predicted L1-RSRP of each reference signal identification of one or more predictions performed by the beam prediction model and the actual L1-RSRP corresponding to the actual each reference signal identification. That is, the CDF curve may be obtained not only on the basis of the predicted best reference signal and/or the actual best reference signal, but may also be determined by using any two other reference signals.

In some embodiments, the model performance indicator may include an average throughput difference. Herein, the average throughput difference may also be referred to as an average UE throughput difference.

For example, the L1-SINR of the corresponding reference signal, i.e., the first L1-SINR and the second L1-SINR, may be determined based on the predicted best reference signal and the actual best reference signal determined through measurement performed by the terminal. Herein, the first L1-SINR is the L1-SINR of the best reference signal corresponding to the best reference signal identification predicted by the beam prediction model, and the second L1-SINR is the L1-SINR of the best reference signal corresponding to the best reference signal identification measured by the terminal. Then, the capacity may be calculated based on a shannon capacity calculation formula. For example, a first capacity is calculated based on the first L1-SINR, and a second capacity is calculated based on the second L1-SINR. The difference between the two capacities is the average throughput difference.

For example, the average throughput difference may be obtained from a single prediction calculation, or may be an average value of the differences between the capacities taken after a plurality of prediction calculations.

In some embodiments, the model performance indicator includes a prediction accuracy, an average decibel difference, a decibel difference determined based on any percentage point in a cumulative distribution function, and/or an average throughput difference, and the model performance indicator may be determined based on the model performance monitoring data.

In some embodiments, the model performance indicator may include a reference signal overhead or a reference signal overhead reduction rate.

In some embodiments, the model performance indicator may include an uplink control information overhead.

In some embodiments, when the model performance indicator includes information such as the reference signal overhead or the reference signal overhead reduction rate, and/or the uplink control information overhead, the model performance indicator may not be determined based on the model performance monitoring data.

The present disclosure provides a plurality of types of model performance indicators, enabling the network device to monitor, based on the model performance indicator, the performance of the beam prediction model in a timely manner, thereby improving the accuracy of the beam prediction model for the beam prediction.

In the beam determination method provided in the embodiments of the present disclosure, FIG. 11 is a flowchart of a further model performance monitoring method illustrated according to an exemplary embodiment. As shown in FIG. 11, in response to the beam prediction model being run on the terminal, receiving the model performance information sent by the terminal at S71 may include the following step S101.

At step S101, the model performance indicator sent by the terminal is received in response to the model performance indicator satisfying a performance indicator threshold value; or the model performance indicator sent by the terminal is received based on a predefined condition.

In some embodiments, the network device may receive the model performance indicator sent by the terminal when the model performance indicator satisfies a preset performance indicator threshold value.

In some embodiments, the network device may receive the model performance indicator sent by the terminal based on a predefined condition. In some embodiments, the predefined condition may be, for example, that the sending of the model performance indicator performed by the terminal is not based on the preset performance indicator threshold value. The terminal may send the model performance indicator to the network device regardless of whether the performance indicator value is large or small, or may send the model performance indicator to the network device when other conditions are satisfied.

In the present disclosure, the model performance indicator that is sent when a certain condition is satisfied is received, enabling the network device to monitor, based on the model performance indicator, the performance of the beam prediction model in a timely manner, thereby improving the accuracy of the beam prediction model for the beam prediction, and at the same time, reducing the consumption of resources caused by the monitoring of the beam prediction model by the network device.

In the beam determination method provided in the embodiments of the present disclosure, FIG. 12 is a flowchart of another model performance monitoring method illustrated according to an exemplary embodiment. Before the model performance information sent by the terminal is received at S71, the method may further include the following step S111.

At step S111, a performance monitoring request sent by the terminal is received in response to the beam prediction model being run on the terminal; or the performance monitoring request is sent to the terminal.

In some embodiments, in response to the beam prediction model being run on the terminal, the network device may receive a performance monitoring request sent by the terminal. Alternatively, the network device may send the performance monitoring request to the terminal.

For example, assuming the beam prediction model is run on the terminal, the network device may receive the performance monitoring request sent by the terminal. It can be understood that the terminal decides to perform the performance monitoring of the beam prediction model. The network device may also send the performance monitoring request to the terminal. It can be understood that the network device decides to perform the performance monitoring of the beam prediction model.

That is, when the beam prediction model is run on the terminal, the performance monitoring of the beam prediction model may be initiated by the terminal or by the network device.

In some embodiments, in response to the beam prediction model being run on the network device, the network device may send the performance monitoring request to the terminal.

For example, assuming that the beam prediction model is run on the network device, the network device may send the performance monitoring request to the terminal. It can be understood that the network device decides to perform the performance monitoring of the beam prediction model.

That is, when the beam prediction model is run on the network device, the performance monitoring of the beam prediction model is initiated by the network device.

In the present disclosure, the performance monitoring request can be sent to trigger the terminal to determine the model performance information, enabling the network device to monitor, based on the model performance indicator, the performance of the beam prediction model in a timely manner, thereby improving the accuracy of the beam prediction model for the beam prediction.

In the beam determination method provided in the embodiments of the present disclosure, in response to the performance monitoring request sent by the terminal being received by the network device, the model performance information is obtained through any of the following manners: the terminal starting to determine the model performance information after a first time interval of sending the performance monitoring request; the terminal starting to determine the model performance information after a second time interval of receiving performance monitoring feedback information sent by the network device; and the terminal starting to determine the model performance information when the terminal receives a reference signal for model performance monitoring sent by the network device.

In some embodiments, in the case where the network device receives the performance monitoring request sent by the terminal, the terminal may start to determine the model performance information after a first time interval of sending the performance monitoring request.

For example, assuming that the first time interval is t1, the terminal may start to determine the model performance monitoring data and/or the model performance indicator after time t1 of sending the performance monitoring request. In some embodiments, determining the model performance monitoring data may include: starting to determine at least one piece of monitoring sample data during the monitoring time period; or starting to determine a piece of monitoring sample data, where the number of the piece of the monitoring sample data is the number of the monitoring sample; or starting to determine at least one piece of monitoring sample data before the reference time. It can be understood that, in response to the model performance indicator including the prediction accuracy, the average decibel difference, the decibel difference determined based on any one percentage point in the cumulative distribution function, and/or the average throughput difference, the model performance indicator may be determined after the start of determining the model performance monitoring data. In response to the model performance indicator including information such as the reference signal overhead and/or the uplink control information overhead, the model performance indicator may start to be determined after time t1 of sending the performance monitoring request.

In some embodiments, in the case where the network device receives the performance monitoring request sent by the terminal, the terminal may start to determine the model performance information after a second time interval of receiving performance monitoring feedback information sent by the network device.

For example, assuming that the second time interval is t2, the terminal may start to determine the model performance monitoring data and/or the model performance indicator after time t2 of receiving the performance monitoring feedback information sent by the network device. In some embodiments, determining the model performance monitoring data may include: starting to determine at least one piece of monitoring sample data during the monitoring time period; or starting to determine a piece of monitoring sample data, where the number of the piece of the monitoring sample data is the number of the monitoring sample; or starting to determine at least one piece of monitoring sample data before the reference time. It can be understood that, in response to the model performance indicator including the prediction accuracy, the average decibel difference, the decibel difference determined based on any one percentage point in the cumulative distribution function, and/or the average throughput difference, the model performance indicator may be determined after the start of determining the model performance monitoring data. In response to the model performance indicator including information such as the reference signal overhead and/or the uplink control information overhead, the model performance indicator may start to be determined after time t2 of receiving the performance monitoring feedback information sent by the network device.

It can be understood that the performance monitoring feedback information sent by the network device may be determined by the network device based on the performance monitoring request as received.

In some embodiments, in the case where the network device receives the performance monitoring request sent by the terminal, the terminal may start to determine the model performance information when the terminal receives a reference signal for model performance monitoring sent by the network device.

For example, the terminal may start to determine the model performance monitoring data and/or the model performance indicator when the terminal receives a reference signal for model performance monitoring sent by the network device. In some embodiments, determining the model performance monitoring data may include: starting to determine at least one piece of monitoring sample data during the monitoring time period; or starting to determine a piece of monitoring sample data, where the number of the piece of the monitoring sample data is the number of the monitoring sample; or starting to determine at least one piece of monitoring sample data before the reference time. It can be understood that, in response to the model performance indicator including the prediction accuracy, the average decibel difference, the decibel difference determined based on any one percentage point in the cumulative distribution function, and/or the average throughput difference, the model performance indicator may be determined after the start of determining the model performance monitoring data. In response to the model performance indicator including information such as the reference signal overhead and/or the uplink control information overhead, the model performance indicator may start to be determined when the reference signal for the model performance monitoring sent by the network device is received.

The present disclosure provides a plurality of types of manners for determining the model performance information, facilitating the sending of the model performance information to the network device. This enables the network device to monitor, based on the model performance information, the performance of the beam prediction model in a timely manner, thereby improving the accuracy of the beam prediction model for the beam prediction.

In the beam determination method provided in the embodiments of the present disclosure, the first time interval is indicated by the network device; or the first time interval is indicated by the terminal; or the first time interval is a second default value.

In some embodiments, the first time interval is indicated by the network device.

In some embodiments, the first time interval is indicated by the terminal.

In some embodiments, the first time interval is a second default value. Herein, the second default value is preset, or specified in a protocol.

In the present disclosure, the first time interval is indicated by using different manners, facilitating the determination of the model performance information. This enables the network device to monitor, based on the model performance information, the performance of the beam prediction model in a timely manner, thereby improving the accuracy of the beam prediction model for the beam prediction.

In the beam determination method provided in the embodiments of the present disclosure, the second time interval is indicated by the network device, or the second time interval is a third default value.

In some embodiments, the second time interval is indicated by the network device.

In some embodiments, the second time interval is a third default value. Herein, the third default value is preset, or specified in a protocol.

In the present disclosure, the second time interval is indicated by using different manners, facilitating the determination of the model performance information. This enables the network device to monitor, based on the model performance information, the performance of the beam prediction model in a timely manner, thereby improving the accuracy of the beam prediction model for the beam prediction.

In the beam determination method provided in the embodiments of the present disclosure, in the case where the network device receives the performance monitoring request sent by the terminal, the terminal may start to determine the model performance information when the terminal receives a reference signal for model performance monitoring sent by the network device. The reference signal for the model performance monitoring includes: in response to the beam prediction model being a spatial domain prediction, the reference signal for the model performance monitoring is a reference signal used for beam monitoring sent by the network device by using each transmit beam; or in response to the beam prediction model being a time domain prediction, the reference signal for the model performance monitoring corresponds to a reference signal used for beam monitoring sent by the network device in each time period.

In some embodiments, in response to the beam prediction model being a spatial domain prediction, the reference signal for the model performance monitoring is a reference signal used for beam monitoring sent by the network device by using each transmit beam.

For example, when the beam prediction model is a spatial domain prediction, and when monitoring of the beam prediction model is required, the reference signal for the model performance monitoring needs to be sent based on all the transmit beams of the network device.

In some embodiments, in response to the beam prediction model being a time domain prediction, the reference signal for the model performance monitoring corresponds to the reference signal for beam measurement sent by the network device in each time period.

For example, when the beam prediction model is the time domain prediction, the network device is required to send the reference signal for beam measurement in each time period.

The present disclosure can be applicable to different modes of the beam prediction model, enabling the network device to monitor, based on the model performance information, the performance of the beam prediction model in a timely manner, thereby improving the accuracy of the beam prediction model for the beam prediction.

In the beam determination method provided in the embodiments of the present disclosure, the performance monitoring request received by the network device is carried by an SR, a second UL MAC CE, or an RA.

In some embodiments, the performance monitoring request received by the network device is carried by an SR.

In some embodiments, the performance monitoring request received by the network device is carried by a second UL MAC CE.

In some embodiments, the performance monitoring request received by the network device is carried by an RA.

In the present disclosure, the performance monitoring request is carried by using different manners, facilitating the determination of the model performance information. This enables the network device to monitor, based on the model performance information, the performance of the beam prediction model in a timely manner, thereby improving the accuracy of the beam prediction model for the beam prediction.

In the beam determination method provided in the embodiments of the present disclosure, in response to the performance monitoring request being sent to the terminal, the model performance information is obtained through the following manner: the terminal starting to determine the model performance information after a third time interval of receiving the performance monitoring request sent by the network device.

In some embodiments, in the case where the network device sends the performance monitoring request to the terminal, the terminal may start to determine the model performance information after a third time interval of receiving the performance monitoring request sent by the network device.

For example, assuming that the third time interval is t3, the terminal may start to determine the model performance monitoring data and/or the model performance indicator after time t3 of receiving the performance monitoring request sent by the network device. In some embodiments, determining the model performance monitoring data may include: starting to determine at least one piece of monitoring sample data during the monitoring time period; or starting to determine a piece of monitoring sample data, where the number of the piece of the monitoring sample data is the number of the monitoring sample; or starting to determine at least one piece of monitoring sample data before the reference time. It can be understood that, in response to the model performance indicator including the prediction accuracy, the average decibel difference, the decibel difference determined based on any one percentage point in the cumulative distribution function, and/or the average throughput difference, the model performance indicator may be determined after the start of determining the model performance monitoring data. In response to the model performance indicator including information such as the reference signal overhead and/or the uplink control information overhead, the model performance indicator may start to be determined after time t3 of receiving the performance monitoring request sent by the network device.

In the present disclosure, the model performance information is determined through the performance monitoring request sent by the network device, facilitating the sending of the model performance information to the network device. This enables the network device to monitor, based on the model performance information, the performance of the beam prediction model in a timely manner, thereby improving the accuracy of the beam prediction model for the beam prediction.

In the beam determination method provided in the embodiments of the present disclosure, the third time interval is indicated by the network device, or the third time interval is a fourth default value.

In some embodiments, the third time interval is indicated by the network device.

In some embodiments, the third time interval is a fourth default value. Herein, the fourth default value is preset, or specified in a protocol.

In the present disclosure, the third time interval is indicated by using different manners, facilitating the determination of the model performance information. This enables the network device to monitor, based on the model performance information, the performance of the beam prediction model in a timely manner, thereby improving the accuracy of the beam prediction model for the beam prediction.

In the beam determination method provided in the embodiments of the present disclosure, the performance monitoring request sent by the network device is carried by a second RRC, a DL MAC CE, a paging, or a DCI.

In some embodiments, the performance monitoring request sent by the network device is carried by a second RRC.

In some embodiments, the performance monitoring request sent by the network device is carried by a DL MAC CE.

In some embodiments, the performance monitoring request sent by the network device is carried by a paging.

In some embodiments, the performance monitoring request sent by the network device is carried by a DCI.

For example, the performance monitoring request received by the terminal is carried by a DCI for scheduling a PUSCH.

In the present disclosure, the performance monitoring request is carried by using different manners, facilitating the determination of the model performance information. This enables the network device to monitor, based on the model performance information, the performance of the beam prediction model in a timely manner, thereby improving the accuracy of the beam prediction model for the beam prediction.

In the beam determination method provided in the embodiments of the present disclosure, FIG. 13 is a flowchart of yet another model performance monitoring method illustrated according to an exemplary embodiment. As shown in FIG. 13, in response to the beam prediction model being run on the terminal, the method may further include the following step S121.

At step S121, model status indication information is sent to the terminal.

In some embodiments, in response to the beam prediction model being run on the terminal, the network device may send the model status indication information to the terminal.

FIG. 14 is a flowchart of a further model performance monitoring method illustrated according to an exemplary embodiment. As shown in FIG. 14, in response to the beam prediction model being run on the network device, the method may further include the following step S131.

At step S131, the model status indication information is determined based on the model performance information.

In some embodiments, in response to the beam prediction model being run on the network device, the network device may determine the model status indication information based on the model performance information as received.

In some embodiments, the model status indication information includes at least one of the following: model activation indication information; model deactivation indication information; model switching indication information; model tuning indication information; and indication information for switching to a non-AI mode. The model tuning indication may be used for indicating tuning on the beam prediction model, such as fine-tuning.

It can be understood that the model status indication information sent by the network device may be determined by the network device based on the model performance information. That is, the network device determines, based on the model performance information, which status indications to perform on the beam prediction model. For example, the network device determines, based on the model performance information, whether activation, deactivation, switching and/or fine-tuning is performed on the beam prediction model. In some embodiments, the indication information for switching to the non-AI mode is used for indicating switching the manner in which beam information is obtained. For example, the AI mode indicates that the beam information is obtained by using the beam prediction model. The non-AI mode indicates that the beam information is not obtained based on the beam prediction model, but rather that the beam information is obtained based on conventional measurement.

In some embodiments, the model status indication information is carried by the second DCI, the second DL MAC CE, and/or the third RRC.

For example, the model status indication information is carried by the second DCI.

As another example, the model status indication information is carried by the second DL MAC CE.

As another example, the model status indication information is carried by the third RRC.

In some embodiments, the third RRC indicates a correspondence of a plurality of model parameter indexes to model parameters. The second DCI and/or the second DL MAC CE is used for indicating the model parameter index.

For example, the third RRC indicates the correspondence of the plurality of model parameter indexes to specific model parameters, and the second DCI and/or the second DL MAC CE is used for indicating the model parameter index.

In some embodiments, the third RRC indicates the correspondence of the plurality of model parameter indexes to model parameters. The second DL MAC CE is used for activating a portion of the plurality of model parameter indexes. The second DCI is used for indicating a model parameter index in the portion of the model parameter indexes.

For example, the third RRC indicates the correspondence of the plurality of model parameter indexes to specific model parameters. The second DL MAC CE is used for activating a portion of the plurality of model parameter indexes. The second DCI is used for indicating a model parameter index of the portion of the model parameter indexes activated by the second DL MAC CE.

In some embodiments, the model status indication information is used for indicating a model parameter index, a model parameter, a model index, or a model version index.

For example, the model status indication information is used for indicating a model parameter index.

As another example, the model status indication information is used for indicating a specific model parameter.

As another example, the model status indication information is used for indicating a model index.

As another example, the model status indication information is used for indicating a model version index.

In some embodiments, the model index includes indexes of beam prediction models with different functions; or in the beam prediction models with the same function, different versions or different model parameter configurations correspond to indexes of different beam prediction models.

For example, the model index includes different indexes corresponding to models with different functions. For different functions, for example, some models are used for the channel state information (CSI) compression, some models are used for the beam prediction, and some models are used for the positioning prediction.

As another example, different model indexes may indicate different versions of beam prediction models with the same function, or indicate different beam prediction models corresponding to different parameter configurations with the same function.

In some embodiments, in response to the beam prediction models with the same function corresponding to the same model index, the model version index includes: indexes of beam prediction models of different versions with the same function, or indexes of beam prediction models of different model parameter configurations with the same function.

For example, the model version index means that if the beam prediction models with the same function correspond to the same model index, beam prediction models of different versions with the same function, or beam prediction models of different parameter configurations with the same function may be distinguished by using the model version index.

In some embodiments, when the terminal receives the model status indication information including the model deactivation indication information, the terminal may terminate predicting beams by using the beam prediction model. The terminal may subsequently measure the beams included in the first beam set or the second beam set by using a conventional manner.

In the present disclosure, the beam prediction model can be adjusted in a timely manner through the model status indication information sent by the network device, which improves the accuracy of the beam prediction model for the beam prediction.

It can be understood that in each of the embodiments depicted in FIGS. 7 to 14 above, if the device on which the beam prediction model is run is not explicitly indicated, the beam prediction model may be run on the terminal or the network device, which is not limited in the present disclosure.

It can be understood that in each of the embodiments depicted in FIGS. 7 to 14 above, the implementation process of each embodiment may refer to the corresponding descriptions in FIGS. 2 to 6, and will not be repeated in the present disclosure.

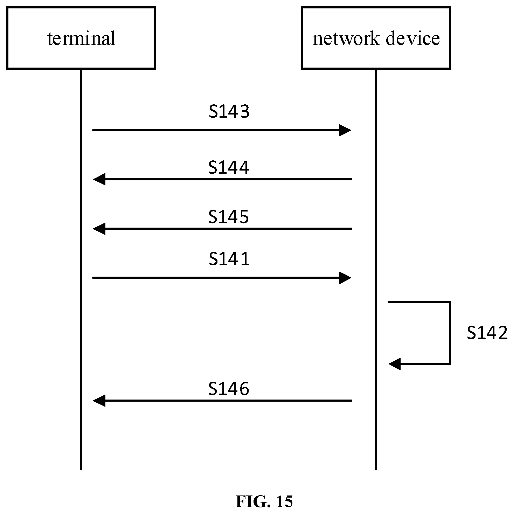

FIG. 15 is a schematic diagram of a model performance monitoring signaling interaction illustrated according to an exemplary embodiment.

The model performance monitoring process shown in FIG. 15 may include the signaling interaction between the terminal and the network device. The process may include the following steps.

At step S141, the terminal sends the model performance information to the network device.

In some embodiments, the terminal sends to the network device the model performance information determined by the terminal. The network device receives the model performance information sent by the terminal.

At step S142, the network device monitors the beam prediction model based on the model performance information.

In some embodiments, the network device may monitor the beam prediction model based on the model performance information as received.

In some embodiments, if the beam prediction model is located on the terminal, before S141, the following step S143 may also be included:
At step S143, the terminal sends the performance monitoring request to the network device.

In some embodiments, the terminal sends the performance monitoring request to the network device. The network device receives the performance monitoring request sent by the terminal.

In some cases, the following step S144 may also be included. At step S144, the network device sends the performance monitoring feedback information to the terminal.

In some embodiments, the network device may send the performance monitoring feedback information to the terminal after receiving the performance monitoring request sent by the terminal. The terminal may receive the performance monitoring feedback information sent by network device.

In some embodiments, if the beam prediction model is located on the terminal, before S141, the following step S145may also be included.

At step S145, the network device sends the performance monitoring request to the terminal.

In some embodiments, the network device sends the performance monitoring request to the terminal. The terminal receives the performance monitoring request sent by the network device.

In some embodiments, if the beam prediction model is located on the terminal, after S142, the following step S146 may also be included.

At step S146, the network device sends the model status indication information to the terminal.

In some embodiments, the network device sends the model status indication information to the terminal. The terminal receives the model status indication information sent by the network device, facilitating the terminal to perform corresponding operations on the model based on the model status indication information, such as activation, deactivation, switching, fine-tuning, etc.

It can be understood that the specific implementation manner of each step in FIG. 15 may refer to the corresponding descriptions in FIGS. 2 to 14, and will not be repeated in the present disclosure.

In the present disclosure, the terminal determines the model performance information, and sends the model performance information to the network device. This enables the network device to monitor, based on the model performance information, the performance of the beam prediction model in a timely manner, thereby improving accuracy of the beam prediction model for beam prediction.

It should be noted that those skilled in the art can understand that various implementations/embodiments involved in the embodiments of the present disclosure described above may be used in conjunction with the aforementioned embodiments, or may be used individually. Whether used individually or in conjunction with the aforementioned embodiments, the implementation principle is similar. In the embodiments of the present disclosure, some embodiments are described as being used together in an implementation. Of course, those skilled in the art can understand that such examples and illustrations do not limit the embodiments of the present disclosure.

Based on the same concept, the embodiments of the present disclosure also provide a model performance monitoring apparatus and device.

It can be understood that, in order to achieve the above functions, the model performance monitoring apparatus and device provided in the embodiments of the present disclosure include corresponding hardware structures and/or software modules for executing the functions. Based on the units and algorithm steps of the examples disclosed in the embodiments of the present disclosure, the embodiments of the present disclosure may be implemented in the form of hardware or a combination of hardware and computer software. Whether a certain function is executed through hardware or computer software driving hardware depends on the specific application and design constraint condition of the technical solution. Those skilled in the art may use different methods to achieve the described functions for each specific application, but such implementation should not be considered beyond the scope of the technical solutions disclosed in the embodiments of the present disclosure.

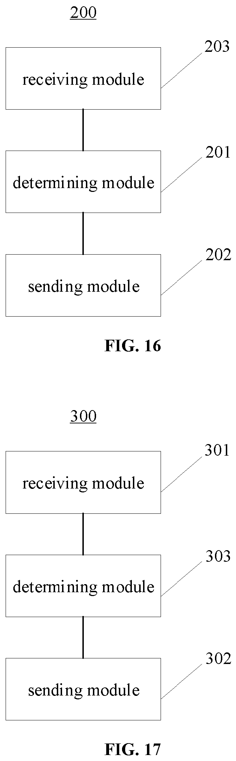

FIG. 16 is a schematic diagram of a model performance monitoring apparatus illustrated according to an exemplary embodiment. Referring to FIG. 16, the apparatus 200 is configured in a terminal. The apparatus 200 includes a determining module 201 configured to determine model performance information, and a sending module 202 configured to send the model performance information to a network device.

In the present disclosure, the terminal determines the model performance information, and sends the model performance information to the network device. This enables the network device to monitor, based on the model performance information, the performance of the beam prediction model in a timely manner, thereby improving the accuracy of the beam prediction model for the beam prediction.

In an embodiment, the model performance information includes model performance monitoring data and/or a model performance indicator.

In the present disclosure, the beam prediction model can be monitored through the model performance monitoring data and/or the model performance indicator, enabling the network device to monitor, based on the model performance monitoring data and/or the model performance indicator, the performance of the beam prediction model in a timely manner, thereby improving the accuracy of the beam prediction model for the beam prediction.

In an embodiment, in response to the model performance information including the model performance monitoring data, the model performance monitoring data includes at least one of the following: at least one piece of monitoring sample data during a monitoring time period; a piece of monitoring sample data, where the number of the piece of the monitoring sample data is the number of the monitoring sample; and at least one piece of monitoring sample data before a reference time.

In the present disclosure, different pieces of monitoring sample data are provided as the model performance monitoring data, facilitating the network device to monitor, based on the model performance monitoring data, the performance of the beam prediction model in a timely manner, thereby improving the accuracy of the beam prediction model for the beam prediction.

In an embodiment, the apparatus 200 further includes a receiving module 203 configured to receive at least one of the monitoring time period, the number of the monitoring sample, and the reference time sent by the network device; or the determining module 201 is further configured to determine, based on a first default value, at least one of the following: the monitoring time period, the number of the monitoring sample, and the reference time. The determining module 201 is further configured to determine the model performance monitoring data based on at least one of the following: the monitoring time period, the number of the monitoring sample, and the reference time.

In the present disclosure, the model performance monitoring data is determined through at least one of the monitoring time period, the number of the monitoring sample, and the reference time, enabling the network device to monitor, based on the model performance monitoring data, the performance of the beam prediction model in a timely manner, thereby improving the accuracy of the beam prediction model for the beam prediction.

In an embodiment, in response to at least one of the monitoring time period, the number of the monitoring sample, and the reference time sent by the network device being received, at least one of the monitoring time period, the number of the monitoring sample, and the reference time is carried in a terminal dedicated signaling or a broadcast signaling.

In the present disclosure, at least one of the monitoring time period, the number of the monitoring sample, and the reference time can be indicated through the UE dedicated signaling or the broadcast signaling, facilitating the terminal to determine the model performance monitoring data based on at least one of the monitoring time period, the number of the monitoring sample, and the reference time as indicated. This enables the network device to monitor, based on the model performance monitoring data, the performance of the beam prediction model in a timely manner, thereby improving the accuracy of the beam prediction model for the beam prediction.

In an embodiment, in response to the beam prediction model being run on the terminal, the monitoring sample data includes at least one of the following:
first beam information in a first beam set obtained by the terminal based on an output of the beam prediction model, where an input to the beam prediction model includes second beam information of a second beam set measured by the terminal; and the second beam set is a subset of the first beam set, or a beam in the second beam set is capable of covering a plurality of beams in the first beam set, or the first beam set is the same as the second beam set;
third beam information in the first beam set measured by the terminal; and
a timestamp corresponding to the monitoring sample data.

The present disclosure provides a plurality of types of monitoring sample data as the model performance monitoring data. This enables the network device to monitor, based on the model performance monitoring data, the performance of the beam prediction model in a timely manner, thereby improving the accuracy of the beam prediction model for the beam prediction.

In an embodiment, in response to the beam prediction model being run on the network device, the monitoring sample data includes at least one of the following:
second beam information of a second beam set measured by the terminal, where an input to the beam prediction model includes the second beam information of the second beam set measured by the terminal, and an output of the beam prediction model includes first beam information in a first beam set; and the second beam set is a subset of the first beam set, or a beam in the second beam set is capable of covering a plurality of beams in the first beam set, or the first beam set is the same as the second beam set;
third beam information in the first beam set measured by the terminal; and
a timestamp corresponding to the monitoring sample data.

The present disclosure provides a plurality of types of monitoring sample data as the model performance monitoring data. This enables the network device to monitor, based on the model performance monitoring data, the performance of the beam prediction model in a timely manner, thereby improving the accuracy of the beam prediction model for the beam prediction.

In an embodiment, the first beam information includes at least one of the following: a first beam identification corresponding to at least one beam in the first beam set, an L1-RSRP corresponding to a beam indicated by the first beam identification, and an L1-SINR corresponding to the beam indicated by the first beam identification. The second beam information includes at least one of the following: a second beam identification corresponding to at least one beam in the second beam set, an L1-RSRP corresponding to a beam indicated by the second beam identification, and an L1-SINR corresponding to the beam indicated by the second beam identification. The third beam information includes at least one of the following: a third beam identification corresponding to at least one beam in the first beam set, an L1-RSRP corresponding to a beam indicated by the third beam identification, and an L1-SINR corresponding to the beam indicated by the third beam identification.

In the present disclosure, by using the beam identifications corresponding to different beams, and the L1-RSRP and/or the L1-SINR of the respective beam as different monitoring sample data, the network device is enabled to monitor, based on the model performance monitoring data including the monitoring sample data, the performance of the beam prediction model in a timely manner, thereby improving the accuracy of the beam prediction model for the beam prediction.

In an embodiment, the timestamp of the monitoring sample includes any of the following: a monitoring time of the monitoring sample data; and a universal interval time, where the universal interval time is used for indicating a time interval between two adjacent pieces of the monitoring sample data.

In the present disclosure, the timestamp of the monitoring sample is indicated in an explicit or implicit manner, enabling the network device to monitor, based on the monitoring sample data including the time information, the performance of the beam prediction model in a timely manner, thereby improving the accuracy of the beam prediction model for the beam prediction.

In an embodiment, the sending module 202 is further configured to send the model performance monitoring data to the network device based on a PUCCH, a PUSCH, a first RRC, and/or a first UL MAC CE.

In the present disclosure, the model performance monitoring parameter can be sent through the PUCCH, the PUSCH, the first RRC, and/or the first UL MAC CE, enabling the network device to monitor, based on the model performance monitoring data, the performance of the beam prediction model in a timely manner, thereby improving the accuracy of the beam prediction model for the beam prediction.

In an embodiment, in response to the beam prediction model being run on the terminal, the model performance information includes the model performance indicator, and the model performance indicator includes at least one of the following: a prediction accuracy; an average decibel difference; a decibel difference determined based on any one percentage point in a cumulative distribution function; an average throughput difference; a reference signal overhead or a reference signal overhead reduction rate; and an uplink control information overhead.

The present disclosure provides a plurality of types of model performance indicators, enabling the network device to monitor, based on the model performance indicator, the performance of the beam prediction model in a timely manner, thereby improving the accuracy of the beam prediction model for the beam prediction.

In an embodiment, in response to the beam prediction model being run on the terminal, the sending module 202 is further configured to: send the model performance indicator to the network device in response to the model performance indicator satisfying a performance indicator threshold value; or send the model performance indicator based on a predefined condition.

In the present disclosure, the model performance indicator is sent when a certain condition is satisfied, enabling the network device to monitor, based on the model performance indicator, the performance of the beam prediction model in a timely manner, thereby improving the accuracy of the beam prediction model for the beam prediction, and at the same time, reducing the consumption of resources caused by the monitoring of the beam prediction model by the network device.

In an embodiment, the sending module 202 is further configured to send a performance monitoring request to the network device in response to the beam prediction model being run on the terminal; or the receiving module 203 is further configured to receive the performance monitoring request sent by the network device.

In the present disclosure, the performance monitoring request can be sent to trigger the terminal to determine the model performance information, enabling the network device to monitor, based on the model performance indicator, the performance of the beam prediction model in a timely manner, thereby improving the accuracy of the beam prediction model for the beam prediction.

In an embodiment, in response to the performance monitoring request being sent to the network device, the determining module 201 is further configured to perform any one of the following: starting to determine the model performance information after a first time interval of sending the performance monitoring request; starting to determine the model performance information after a second time interval of receiving performance monitoring feedback information sent by the network device; and starting to determine the model performance information when a reference signal for model performance monitoring sent by the network device is received.

The present disclosure provides a plurality of types of manners for determining the model performance information by sending the performance monitoring request to the network device, facilitating the sending of the model performance information to the network device. This enables the network device to monitor, based on the model performance information, the performance of the beam prediction model in a timely manner, thereby improving the accuracy of the beam prediction model for the beam prediction.

In an embodiment, the first time interval is indicated by the network device; or the first time interval is indicated by the terminal; or the first time interval is a second default value.

In the present disclosure, the first time interval is indicated by using different manners, facilitating the determination of the model performance information. This enables the network device to monitor, based on the model performance information, the performance of the beam prediction model in a timely manner, thereby improving the accuracy of the beam prediction model for the beam prediction.

In an embodiment, the second time interval is indicated by the network device, or the second time interval is a third default value.

In the present disclosure, the second time interval is indicated by using different manners, facilitating the determination of the model performance information. This enables the network device to monitor, based on the model performance information, the performance of the beam prediction model in a timely manner, thereby improving the accuracy of the beam prediction model for the beam prediction.

In an embodiment, the performance monitoring request sent by the terminal is carried by an SR, a second UL MAC CE, or an RA.

In the present disclosure, the performance monitoring request is carried by using different manners, facilitating the determination of the model performance information. This enables the network device to monitor, based on the model performance information, the performance of the beam prediction model in a timely manner, thereby improving the accuracy of the beam prediction model for the beam prediction.

In an embodiment, in response to the performance monitoring request sent by the network device being received, the determining module 201 is further configured to start to determine the model performance information after a third time interval of receiving the performance monitoring request sent by the network device.

In the present disclosure, the model performance information is determined through receipt of the performance monitoring request sent by the network device, facilitating the sending of the model performance information to the network device. This enables the network device to monitor, based on the model performance information, the performance of the beam prediction model in a timely manner, thereby improving the accuracy of the beam prediction model for the beam prediction.

In an embodiment, the third time interval is indicated by the network device, or the third time interval is a fourth default value.

In the present disclosure, the third time interval is indicated by using different manners, facilitating the determination of the model performance information. This enables the network device to monitor, based on the model performance information, the performance of the beam prediction model in a timely manner, thereby improving the accuracy of the beam prediction model for the beam prediction.

In an embodiment, the performance monitoring request received by the terminal is carried by a second RRC, a DL MAC CE, a paging, or a DCI.

In the present disclosure, the performance monitoring request is carried by using different manners, facilitating the determination of the model performance information. This enables the network device to monitor, based on the model performance information, the performance of the beam prediction model in a timely manner, thereby improving the accuracy of the beam prediction model for the beam prediction.

In an embodiment, in response to the beam prediction model being run on the terminal, the receiving module is further configured to receive model status indication information sent by the network device. The model status indication information includes at least one of the following: model activation indication information; model deactivation indication information; model switching indication information; model tuning indication information; and indication information for switching to a non-AI mode.

In the present disclosure, the beam prediction model can be adjusted in a timely manner through the model status indication information sent by the network device, which improves the accuracy of the beam prediction model for the beam prediction.

FIG. 17 is a schematic diagram of another model performance monitoring apparatus illustrated according to an exemplary embodiment. Referring to FIG. 17, the apparatus 300 is configured in a network device. The apparatus 300 includes a receiving module 301 configured to receive model performance information sent by a terminal.

In the present disclosure, the model performance information sent by the terminal is received, enabling the network device to monitor, based on the model performance information, the performance of the beam prediction model in a timely manner, thereby improving the accuracy of the beam prediction model for the beam prediction.

In an embodiment, the model performance information includes model performance monitoring data and/or a model performance indicator.

In the present disclosure, the beam prediction model can be monitored through the model performance monitoring data and/or the model performance indicator, enabling the network device to monitor, based on the model performance monitoring data and/or the model performance indicator, the performance of the beam prediction model in a timely manner, thereby improving the accuracy of the beam prediction model for the beam prediction.

In an embodiment, in response to the model performance information including the model performance monitoring data, the model performance monitoring data includes at least one of the following: at least one piece of monitoring sample data during a monitoring time period; a piece of monitoring sample data, where the number of the piece of the monitoring sample data is the number of the monitoring sample; and at least one piece of monitoring sample data before a reference time.

In the present disclosure, different pieces of monitoring sample data are provided as the model performance monitoring data, facilitating the network device to monitor, based on the model performance monitoring data, the performance of the beam prediction model in a timely manner, thereby improving the accuracy of the beam prediction model for the beam prediction.

In an embodiment, the apparatus 300 further includes a sending module 302 configured to send to the terminal at least one of the following: the monitoring time period, the number of the monitoring sample, and the reference time; or a determining module 303 configured to determine, based on a first default value, at least one of the following: the monitoring time period, the number of the monitoring sample, and the reference time_{∘}

In the present disclosure, the model performance monitoring data is determined through at least one of the monitoring time period, the number of the monitoring sample, and the reference time, enabling the network device to monitor, based on the model performance monitoring data, the performance of the beam prediction model in a timely manner, thereby improving the accuracy of the beam prediction model for the beam prediction.

In an embodiment, in response to at least one of the monitoring time period, the number of the monitoring sample, and the reference time being sent to the terminal, at least one of the monitoring time period, the number of the monitoring sample, and the reference time is carried in a terminal dedicated signaling or a broadcast signaling.

In the present disclosure, at least one of the monitoring time period, the number of the monitoring sample, and the reference time can be indicated through the UE dedicated signaling or the broadcast signaling, facilitating the indication for the terminal to determine the model performance monitoring data based on at least one of the monitoring time period, the number of the monitoring sample, and the reference time. This enables the network device to monitor, based on the model performance monitoring data, the performance of the beam prediction model in a timely manner, thereby improving the accuracy of the beam prediction model for the beam prediction.

In an embodiment, in response to the beam prediction model being run on the terminal, the monitoring sample data includes at least one of the following:
first beam information in a first beam set obtained by the terminal based on an output of the beam prediction model, where an input to the beam prediction model includes second beam information of a second beam set measured by the terminal; and the second beam set is a subset of the first beam set, or a beam in the second beam set is capable of covering a plurality of beams in the first beam set, or the first beam set is the same as the second beam set;
third beam information in the first beam set measured by the terminal; and
a timestamp corresponding to the monitoring sample data.

The present disclosure provides a plurality of types of monitoring sample data as the model performance monitoring data. This enables the network device to monitor, based on the model performance monitoring data, the performance of the beam prediction model in a timely manner, thereby improving the accuracy of the beam prediction model for the beam prediction.

In an embodiment, in response to the beam prediction model being run on the network device, the monitoring sample data includes at least one of the following:
second beam information of a second beam set measured by the terminal, where an input to the beam prediction model includes the second beam information of the second beam set measured by the terminal, and an output of the beam prediction model includes first beam information in a first beam set; and the second beam set is a subset of the first beam set, or a beam in the second beam set is capable of covering a plurality of beams in the first beam set, or the first beam set is the same as the second beam set;
third beam information in the first beam set measured by the terminal; and
a timestamp corresponding to the monitoring sample data.

The present disclosure provides a plurality of types of monitoring sample data as the model performance monitoring data. This enables the network device to monitor, based on the model performance monitoring data, the performance of the beam prediction model in a timely manner, thereby improving the accuracy of the beam prediction model for the beam prediction.

In an embodiment, the first beam information includes at least one of the following: a first beam identification corresponding to at least one beam in the first beam set, an L1-RSRP corresponding to a beam indicated by the first beam identification, and an L1-SINR corresponding to the beam indicated by the first beam identification. The second beam information includes at least one of the following: a second beam identification corresponding to at least one beam in the second beam set, an L1-RSRP corresponding to a beam indicated by the second beam identification, and an L1-SINR corresponding to the beam indicated by the second beam identification. The third beam information includes at least one of the following: a third beam identification corresponding to at least one beam in the first beam set, an L1-RSRP corresponding to a beam indicated by the third beam identification, and an L1-SINR corresponding to the beam indicated by the third beam identification.

In the present disclosure, by using the beam identifications corresponding to different beams, and the L1-RSRP and/or the L1-SINR of the respective beam as different monitoring sample data, the network device is enabled to monitor, based on the model performance monitoring data including the monitoring sample data, the performance of the beam prediction model in a timely manner, thereby improving the accuracy of the beam prediction model for the beam prediction.

In an embodiment, the timestamp of the monitoring sample includes any of the following: a monitoring time of the monitoring sample data; and a universal interval time, where the universal interval time is used for indicating a time interval between two adjacent pieces of the monitoring sample data.

In the present disclosure, the timestamp of the monitoring sample is indicated in an explicit or implicit manner, enabling the network device to monitor, based on the monitoring sample data including the time information, the performance of the beam prediction model in a timely manner, thereby improving the accuracy of the beam prediction model for the beam prediction.

In an embodiment, the receiving module 301 is further configured to receive, based on a PUCCH, a PUSCH, a first RRC, and/or a first ULMAC CE, the model performance monitoring data sent by the terminal.

In the present disclosure, the model performance monitoring parameter can be sent through the PUCCH, the PUSCH, the first RRC, and/or the first UL MAC CE, enabling the network device to monitor, based on the model performance monitoring data, the performance of the beam prediction model in a timely manner, thereby improving the accuracy of the beam prediction model for the beam prediction.

In an embodiment, in response to the beam prediction model being run on the terminal, the model performance information includes the model performance indicator; or in response to the beam prediction model being run on the network device, the determining module 303 is further configured to determine the model performance indicator based on the model performance monitoring data. In some embodiments, the model performance indicator includes at least one of the following: a prediction accuracy; an average decibel difference; a decibel difference determined based on any one percentage point in a cumulative distribution function; an average throughput difference; a reference signal overhead or a reference signal overhead reduction rate; and an uplink control information overhead.

The present disclosure provides a plurality of types of model performance indicators, enabling the network device to monitor, based on the model performance indicator, the performance of the beam prediction model in a timely manner, thereby improving the accuracy of the beam prediction model for the beam prediction.

In an embodiment, in response to the beam prediction model being run on the terminal, the receiving module 301 is further configured to: receive, in response to the model performance indicator satisfying a performance indicator threshold value, the model performance indicator sent by the terminal; or receive, based on a predefined condition, the model performance indicator sent by the terminal.

In the present disclosure, the model performance indicator that is sent when a certain condition is satisfied is received, enabling the network device to monitor, based on the model performance indicator, the performance of the beam prediction model in a timely manner, thereby improving the accuracy of the beam prediction model for the beam prediction, and at the same time, reducing the consumption of resources caused by the monitoring of the beam prediction model by the network device.

In an embodiment, before the model performance information sent by the terminal is received, the receiving module 301 is further configured to receive, in response to the beam prediction model being run on the terminal, a performance monitoring request sent by the terminal; or the sending module 302 is further configured to send the performance monitoring request to the terminal.

In the present disclosure, the performance monitoring request can be sent to trigger the terminal to determine the model performance information, enabling the network device to monitor, based on the model performance indicator, the performance of the beam prediction model in a timely manner, thereby improving the accuracy of the beam prediction model for the beam prediction.

In an embodiment, in response to the performance monitoring request sent by the terminal being received by the network device, the model performance information is obtained through any of the following manners: the terminal starting to determine the model performance information after a first time interval of sending the performance monitoring request by the terminal; the terminal starting to determine the model performance information after a second time interval of receiving by the terminal performance monitoring feedback information sent by the network device; and the terminal starting to determine the model performance information when the terminal receives a reference signal for model performance monitoring sent by the network device.

The present disclosure provides a plurality of types of manners for determining the model performance information, facilitating the sending of the model performance information to the network device. This enables the network device to monitor, based on the model performance information, the performance of the beam prediction model in a timely manner, thereby improving the accuracy of the beam prediction model for the beam prediction.

In an embodiment, the first time interval is indicated by the network device; or the first time interval is indicated by the terminal; or the first time interval is a second default value.

In the present disclosure, the first time interval is indicated by using different manners, facilitating the determination of the model performance information. This enables the network device to monitor, based on the model performance information, the performance of the beam prediction model in a timely manner, thereby improving the accuracy of the beam prediction model for the beam prediction.

In an embodiment, the second time interval is indicated by the network device, or the second time interval is a third default value.

In the present disclosure, the second time interval is indicated by using different manners, facilitating the determination of the model performance information. This enables the network device to monitor, based on the model performance information, the performance of the beam prediction model in a timely manner, thereby improving the accuracy of the beam prediction model for the beam prediction.

In an embodiment, the performance monitoring request received by the network device is carried by an SR, a second UL MAC CE, or an RA.

In the present disclosure, the performance monitoring request is carried by using different manners, facilitating the determination of the model performance information. This enables the network device to monitor, based on the model performance information, the performance of the beam prediction model in a timely manner, thereby improving the accuracy of the beam prediction model for the beam prediction.

In an embodiment, in response to the performance monitoring request being sent to the terminal, the model performance information is obtained through the following manner: the terminal starting to determine the model performance information after a third time interval of receiving by the terminal the performance monitoring request sent by the network device.

In the present disclosure, the model performance information is determined through the performance monitoring request sent by the network device, facilitating the sending of the model performance information to the network device. This enables the network device to monitor, based on the model performance information, the performance of the beam prediction model in a timely manner, thereby improving the accuracy of the beam prediction model for the beam prediction.

In an embodiment, the third time interval is indicated by the network device, or the third time interval is a fourth default value.

In the present disclosure, the third time interval is indicated by using different manners, facilitating the determination of the model performance information. This enables the network device to monitor, based on the model performance information, the performance of the beam prediction model in a timely manner, thereby improving the accuracy of the beam prediction model for the beam prediction.

In an embodiment, the performance monitoring request sent by the network device is carried by a second RRC, a DL MAC CE, a paging, or a DCI.

In the present disclosure, the performance monitoring request is carried by using different manners, facilitating the determination of the model performance information. This enables the network device to monitor, based on the model performance information, the performance of the beam prediction model in a timely manner, thereby improving the accuracy of the beam prediction model for the beam prediction.

In an embodiment, in response to the beam prediction model being run on the terminal, the sending module 302 is further configured to send model status indication information to the terminal; or in response to the beam prediction model being run on the network device, the determining module 303 is further configured to determine the model status indication information based on the model performance information. In some embodiments, the model status indication information includes at least one of the following: model activation indication information; model deactivation indication information; model switching indication information; model tuning indication information; and indication information for switching to a non-AI mode.

In the present disclosure, the beam prediction model can be adjusted in a timely manner through the model status indication information sent by the network device, which improves the accuracy of the beam prediction model for the beam prediction.

With respect to the apparatus in the above embodiments, the specific manner in which each module performs an operation has been described in detail in the embodiments related to the method, and will not be described in detail herein.

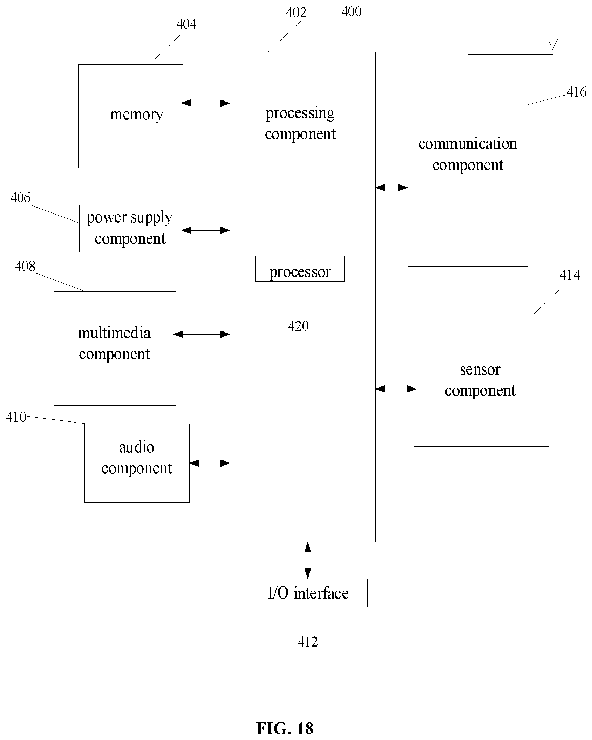

FIG. 18 is a schematic diagram of a model performance monitoring device illustrated according to an exemplary embodiment. For example, the device 400 may be any terminal such as a mobile phone, a computer, a digital broadcast terminal, a message transceiver device, a game console, a tablet device, a medical device, a fitness device, or a personal digital assistant, etc.

Referring to FIG. 18, the device 400 may include one or more of the following components: a processing component 402, a memory 404, a power supply component 406, a multimedia component 408, an audio component 410, an input/output (I/O) interface 412, a sensor component 414, and a communication component 416.

The processing component 402 generally controls the overall operation of the device 400, such as operations associated with display, telephone calls, data communication, camera operations, and recording operations. The processing component 402 may include one or more processors 420 to execute an instruction to complete all or part of the steps of the method described above. In addition, the processing component 402 may include one or more modules that facilitate the interaction between the processing component 402 and other components. For example, the processing component 402 may include a multimedia module to facilitate the interaction between the multimedia component 408 and the processing component 402.

The memory 404 is configured to store various types of data to support the operations on the device 400. Examples of such data include the following: an instruction of any application program or method operated on the device 400, contact data, phonebook data, messages, pictures, videos, etc. The memory 404 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk, or a CD-ROM.

The power supply component 406 supplies power to various components of the device 400. The power supply component 406 may include a power supply management system, one or more power supplies, and other components associated with generating, managing and distributing power for the device 400.

The multimedia component 408 includes a screen that provides an output interface between the device 400 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundaries of the touch or swipe action, but also detect the duration and pressure associated with the touch or swipe operation. In some embodiments, the multimedia component 408 includes a front-facing camera and/or a rear-facing camera. The front-facing camera and/or the rear-facing camera may receive external multimedia data when the device 400 is in an operating mode, such as a shooting mode or a video mode. Each of the front-facing camera and the rear-facing camera may be a fixed optical lens system or have a focal length and optical zoom capability.

The audio component 410 is configured to output and/or input audio signals. For example, the audio component 410 includes a microphone (MIC) configured to receive external audio signals when the device 400 is in an operating mode, such as a calling mode, a recording mode and a voice recognition mode. The received audio signals may be further stored in the memory 404 or sent via the communication component 416. In some embodiments, the audio component 410 further includes a speaker for outputting the audio signals.

The I/O interface 412 provides an interface between the processing component 402 and a peripheral interface module. The peripheral interface module described above may be a keypad, a click wheel, a button, etc. These buttons may include, but are not limited to, a home button, a volume button, a start button, and a lock button.

The sensor component 414 includes one or more sensors configured to provide state assessment of various aspects of the device 400. For example, the sensor component 414 may detect an open/closed state of the device 400, and relative positioning of the components, for example, the components are the display and small keypad of the device 400. The sensor component 414 may also detect a change in the position of the device 400 or a change in the position of a component of the device 400, the presence or absence of contact between the user and the device 400, the orientation or acceleration/deceleration of the device 400, and temperature changes of the device 400. The sensor component 414 may include a proximity sensor that is configured to detect the presence of nearby objects in the absence of any physical contact. The sensor component 414 may also include a light sensor, such as a CMOS or CCD image sensor, for use in imaging applications. In some embodiments, the sensor component 414 may also include an accelerometer sensor, a gyroscope sensor, a magnetic sensor, a pressure sensor, or a temperature sensor.

The communication component 416 is configured to facilitate the communication between the device 400 and other devices in wired or wireless manners. The device 400 may access a wireless network based on a communication standard, such as WiFi, 2G, 3G, or a combination thereof. In an exemplary embodiment, the communication component 416 receives broadcast signals or broadcast related information from an external broadcast management system via a broadcast channel. In an exemplary embodiment, the communication component 416 further includes a near-field communication (NFC) module to facilitate short-range communication. For example, the NFC module may be implemented based on the radio frequency identification (RFID) technology, the infrared data association (IrDA) technology, the ultra-wideband (UWB) technology, the Bluetooth (BT) technology, or other technologies.

In an exemplary embodiment, the device 400 may be implemented by one or more of the following: an application-specific integrated circuit (ASIC), a digital signal processor (DSP), a digital signal processing device (DSPD), a programmable logic device (PLD), a field-programmable gate array (FPGA), a controller, a microcontroller, a microprocessor, or other electronic elements, to perform the method described above.

In an exemplary embodiment, a non-transitory computer-readable storage medium including an instruction is provided, such as the memory 404 including an instruction. The instruction described above is capable of being executed by the processor 420 of the device 400 to complete the method described above. For example, the non-transitory computer-readable storage medium may be an ROM, a random access memory (RAM), a CD-ROM, a magnetic tape, a floppy disk, or an optical data storage device.

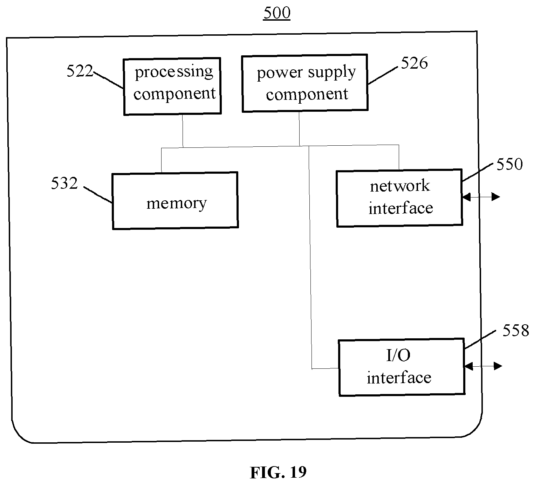

FIG. 19 is a schematic diagram of another model performance monitoring device illustrated according to an exemplary embodiment. For example, the device 500 may be provided as a base station or a server. Referring to FIG. 19, the device 500 includes a processing component 522, where the processing component 522 further includes one or more processors, and a memory resource represented by a memory 532 for storing an instruction, such as an application program, that is executable by the processing component 522. The application program stored in the memory 532 may include one or more modules each corresponding to a set of instructions. In addition, the processing component 522 is configured to execute the instruction to perform the method described above.

The device 500 may further include a power supply component 526 configured to perform power management of the device 500, a wired or wireless network interface 550 configured to connect the device 500 to the network, and an I/O interface 558. The device 500 may operate an operating system stored in the memory 532, such as Windows Server TM, Mac OS XTM, UnixTM, LinuxTM, FreeBSDTM, or the like.

The present disclosure provides a method for model performance monitoring through reporting of the terminal when the beam prediction model is located on the terminal or the network device, improving the accuracy of the beam prediction based on the beam prediction model.

It can be further understood that "a plurality of" in the present disclosure refers to two or more, and other quantifiers are similar to it. "And/or" describes an association relationship between related objects, and indicates that there may be three types of relationships. For example, A and/or B may indicate: A exists alone, A and B exist simultaneously, and B exists alone. The character "/" generally indicates that the associated object before and after is in an "or" relationship. The singular forms of "one", "the", and "said" are also intended to include the majority form, unless the context clearly indicates otherwise.

It can be further understood that the terms "first", "second", etc. are used for describing various information, but such information should not be limited to these terms. These terms are only used to distinguish information of the same type from each other, and do not indicate a specific order or level of importance. In fact, expressions such as "first" and "second" may be used interchangeably. For example, without departing from the scope of the present disclosure, the first information may also be referred to as the second information, and similarly, the second information may also be referred to as the first information.

It can be further understood that the meanings of words such as "in response to" and "if" involved in the present disclosure depend on the context and the actual usage scenario. For example, the word "in response to" used here may be interpreted as "when", or "at the time of", or "in case of", or "if".

It can be further understood that although the operations are described in a specific order in the accompanying drawings in the embodiments of the present disclosure, it should not be understood as requiring the execution of these operations in the specific order or serial order as shown, or requiring the execution of all the operations as shown to achieve the desired results. In a specific environment, multitasking and parallel processing may be advantageous.

After considering the specification and practicing the invention disclosed herein, those skilled in the art will easily come up with other implementation solutions of the present invention. The present application is intended to cover any variations, uses or adaptive changes of the present disclosure, and the variations, uses or adaptive changes follow the general principles of the present disclosure and include common knowledge or commonly used technical means in the technical field that is not disclosed in the present disclosure.

It should be understood that the present disclosure is not limited to the precise structure which has been described above and illustrated in the accompanying drawings, and that various modifications and alterations may be made without departing from the scope of the present disclosure. The scope of the present disclosure is limited only by the appended claims.

## Claims

1. A model performance monitoring method, **characterized in that** the method is applied to a terminal, and comprises:
determining model performance information; and
sending the model performance information to a network device.

2. The method according to claim 1, wherein the model performance information comprises model performance monitoring data and/or a model performance indicator.

3. The method according to claim 2, wherein in response to the model performance information comprising the model performance monitoring data, the model performance monitoring data comprises at least one of:
at least one piece of monitoring sample data during a monitoring time period;
a piece of monitoring sample data, wherein a number of the piece of the monitoring sample data is a number of a monitoring sample; and
at least one piece of monitoring sample data before a reference time.

4. The method according to claim 3, wherein the determining the model performance information comprises:
receiving at least one of the monitoring time period, the number of the monitoring sample, and the reference time sent by the network device; or determining, based on a first default value, at least one of the monitoring time period, the number of the monitoring sample, and the reference time; and
determining the model performance monitoring data based on at least one of the monitoring time period, the number of the monitoring sample, and the reference time.

5. The method according to claim 4, wherein in response to receiving at least one of the monitoring time period, the number of the monitoring sample, and the reference time sent by the network device, at least one of the monitoring time period, the number of the monitoring sample, and the reference time is carried in a terminal dedicated signaling or a broadcast signaling.

6. The method according to any one of claims 3 to 5, wherein in response to a beam prediction model being run on the terminal, the monitoring sample data comprises at least one of:
first beam information in a first beam set obtained by the terminal based on an output of the beam prediction model, wherein an input to the beam prediction model comprises second beam information of a second beam set measured by the terminal; and the second beam set is a subset of the first beam set, or a beam in the second beam set is capable of covering a plurality of beams in the first beam set, or the first beam set is the same as the second beam set;
third beam information in the first beam set measured by the terminal; and
a timestamp corresponding to the monitoring sample data.

7. The method according to any one of claims 3 to 5, wherein in response to a beam prediction model being run on the network device, the monitoring sample data comprises at least one of:
second beam information of a second beam set measured by the terminal, wherein an input to the beam prediction model comprises the second beam information of the second beam set measured by the terminal, and an output of the beam prediction model comprises first beam information in a first beam set; and the second beam set is a subset of the first beam set, or a beam in the second beam set is capable of covering a plurality of beams in the first beam set, or the first beam set is the same as the second beam set;
third beam information in the first beam set measured by the terminal; and
a timestamp corresponding to the monitoring sample data.

8. The method according to claim 6 or 7, wherein
the first beam information comprises at least one of: a first beam identification corresponding to at least one beam in the first beam set, a layer 1 reference signal received power (L1-RSRP) corresponding to a beam indicated by the first beam identification, and a layer 1 signal to interference plus noise ratio (L1-SINR) corresponding to the beam indicated by the first beam identification;
the second beam information comprises at least one of: a second beam identification corresponding to at least one beam in the second beam set, an L1-RSRP corresponding to a beam indicated by the second beam identification, and an L1-SINR corresponding to the beam indicated by the second beam identification; and
the third beam information comprises at least one of: a third beam identification corresponding to at least one beam in the first beam set, an L1-RSRP corresponding to a beam indicated by the third beam identification, and an L1-SINR corresponding to the beam indicated by the third beam identification.

9. The method according to claim 6 or 7, wherein the timestamp of the monitoring sample comprises any one of:
a monitoring time of the monitoring sample data; and
a universal interval time, wherein the universal interval time is used for indicating a time interval between two adjacent pieces of the monitoring sample data.

10. The method according to any one of claims 3 to 9, wherein the sending the model performance information to the network device comprises:
sending, based on a physical uplink control channel (PUCCH), a physical uplink shared channel (PUSCH), a first radio resource control (RRC), and/or a first uplink (UL) media access control control element (MAC CE), the model performance monitoring data to the network device.

11. The method according to any one of claims 2 to 6, wherein in response to a beam prediction model being run on the terminal, the model performance information comprises the model performance indicator, and the model performance indicator comprises at least one of:
a prediction accuracy;
an average decibel difference;
a decibel difference determined based on any one percentage point in a cumulative distribution function;
an average throughput difference;
a reference signal overhead or a reference signal overhead reduction rate; and
an uplink control information overhead.

12. The method according to claim 11, wherein in response to the beam prediction model being run on the terminal, the sending the model performance information to the network device comprises:
sending, in response to the model performance indicator satisfying a performance indicator threshold value, the model performance indicator to the network device; or
sending, based on a predefined condition, the model performance indicator to the network device.

13. The method according to claim 1, wherein before the determining the model performance information, the method further comprises:
sending, in response to a beam prediction model being run on the terminal, a performance monitoring request to the network device; or
receiving the performance monitoring request sent by the network device.

14. The method according to claim 13, wherein in response to sending the performance monitoring request to the network device, the determining the model performance information comprises any of:
starting to determine the model performance information after a first time interval of sending the performance monitoring request;
starting to determine the model performance information after a second time interval of receiving performance monitoring feedback information sent by the network device; and
starting to determine the model performance information when a reference signal for model performance monitoring sent by the network device is received.

15. The method according to claim 14, wherein the first time interval is indicated by the network device; or
the first time interval is indicated by the terminal; or
the first time interval is a second default value.

16. The method according to claim 14, wherein the second time interval is indicated by the network device, or the second time interval is a third default value.

17. The method according to any one of claims 13 to 16, wherein the performance monitoring request sent by the terminal is carried by a scheduling request (SR), a second UL MAC CE, or a random access (RA).

18. The method according to claim 13, wherein in response to receiving the performance monitoring request sent by the network device, the determining the model performance information comprises:
starting to determine the model performance information after a third time interval of receiving the performance monitoring request sent by the network device.

19. The method according to claim 18, wherein the third time interval is indicated by the network device, or the third time interval is a fourth default value.

20. The method according to claim 13, 18 or 19, wherein the performance monitoring request received by the terminal is carried by a second RRC, a downlink (DL) MAC CE, a paging, or downlink control information (DCI).

21. The method according to claim 1, wherein in response to a beam prediction model being run on the terminal, the method further comprises:
receiving model status indication information sent by the network device, wherein the model status indication information comprises at least one of:
model activation indication information;
model deactivation indication information;
model switching indication information;
model tuning indication information; and
indication information for switching to a non-artificial intelligence (AI) mode.

22. A model performance monitoring method, **characterized in that** the method is applied to a network device, and comprises:
receiving model performance information sent by a terminal.

23. The method according to claim 22, wherein the model performance information comprises model performance monitoring data and/or a model performance indicator.

24. The method according to claim 23, wherein in response to the model performance information comprising the model performance monitoring data, the model performance monitoring data comprises at least one of:
at least one piece of monitoring sample data during a monitoring time period;
a piece of monitoring sample data, wherein a number of the piece of the monitoring sample data is a number of a monitoring sample; and
at least one piece of monitoring sample data before a reference time.

25. The method according to claim 24, wherein the method further comprises:
sending, to the terminal, at least one of the monitoring time period, the number of the monitoring sample, and the reference time; or
determining, based on a first default value, at least one of the monitoring time period, the number of the monitoring sample, and the reference time.

26. The method according to claim 25, wherein in response to sending, to the terminal, at least one of the monitoring time period, the number of the monitoring sample, and the reference time, at least one of the monitoring time period, the number of the monitoring sample, and the reference time is carried in a terminal dedicated signaling or a broadcast signaling.

27. The method according to any one of claims 24 to 26, wherein in response to a beam prediction model being run on the terminal, the monitoring sample data comprises at least one of:
first beam information in a first beam set obtained by the terminal based on an output of the beam prediction model, wherein an input to the beam prediction model comprises second beam information of a second beam set measured by the terminal; and the second beam set is a subset of the first beam set, or a beam in the second beam set is capable of covering a plurality of beams in the first beam set, or the first beam set is the same as the second beam set;
third beam information in the first beam set measured by the terminal; and
a timestamp corresponding to the monitoring sample data.

28. The method according to any one of claims 24 to 26, wherein in response to a beam prediction model being run on the network device, the monitoring sample data comprises at least one of:
second beam information of a second beam set measured by the terminal, wherein an input to the beam prediction model comprises the second beam information of the second beam set measured by the terminal, and an output of the beam prediction model comprises first beam information in a first beam set; and the second beam set is a subset of the first beam set, or a beam in the second beam set is capable of covering a plurality of beams in the first beam set, or the first beam set is the same as the second beam set;
third beam information in the first beam set measured by the terminal; and
a timestamp corresponding to the monitoring sample data.

29. The method according to claim 27 or 28, wherein
the first beam information comprises at least one of: a first beam identification corresponding to at least one beam in the first beam set, a layer 1 reference signal received power (L1-RSRP) corresponding to a beam indicated by the first beam identification, and a layer 1 signal to interference plus noise ratio (L1-SINR) corresponding to the beam indicated by the first beam identification;
the second beam information comprises at least one of: a second beam identification corresponding to at least one beam in the second beam set, an L1-RSRP corresponding to a beam indicated by the second beam identification, and an L1-SINR corresponding to the beam indicated by the second beam identification; and
the third beam information comprises at least one of: a third beam identification corresponding to at least one beam in the first beam set, an L1-RSRP corresponding to a beam indicated by the third beam identification, and an L1-SINR corresponding to the beam indicated by the third beam identification.

30. The method according to claim 27 or 28, wherein the timestamp of the monitoring sample comprises any one of:
a monitoring time of the monitoring sample data; and
a universal interval time, wherein the universal interval time is used for indicating a time interval between two adjacent pieces of the monitoring sample data.

31. The method according to any one of claims 24 to 30, wherein the receiving the model performance information sent by the terminal comprises:
receiving, based on a physical uplink control channel (PUCCH), a physical uplink shared channel (PUSCH), a first radio resource control (RRC), and/or a first uplink (UL) media access control control element (MAC CE), the model performance monitoring data sent by the terminal.

32. The method according to any one of claims 23 to 31, wherein in response to a beam prediction model being run on the terminal, the model performance information comprises the model performance indicator; or in response to the beam prediction model being run on the network device, the model performance indicator is determined based on the model performance monitoring data; and
the model performance indicator comprises at least one of:
a prediction accuracy;
an average decibel difference;
a decibel difference determined based on any one percentage point in a cumulative distribution function;
an average throughput difference;
a reference signal overhead or a reference signal overhead reduction rate; and
an uplink control information overhead.

33. The method according to claim 32, wherein in response to the beam prediction model being run on the terminal, the receiving the model performance information sent by the terminal comprises:
receiving, in response to the model performance indicator satisfying a performance indicator threshold value, the model performance indicator sent by the terminal; or
receiving, based on a predefined condition, the model performance indicator sent by the terminal.

34. The method according to claim 22, wherein before the receiving the model performance information sent by the terminal, the method further comprises:
receiving, in response to a beam prediction model being run on the terminal, a performance monitoring request sent by the terminal; or
sending the performance monitoring request to the terminal.

35. The method according to claim 34, wherein in response to receiving the performance monitoring request sent by the terminal, the model performance information is obtained through any of the following manners:
the terminal starting to determine the model performance information after a first time interval of sending the performance monitoring request by the terminal;
the terminal starting to determine the model performance information after a second time interval of receiving by the terminal performance monitoring feedback information sent by the network device; and
the terminal starting to determine the model performance information when the terminal receives a reference signal for model performance monitoring sent by the network device.

36. The method according to claim 35, wherein the first time interval is indicated by the network device; or
the first time interval is indicated by the terminal; or
the first time interval is a second default value.

37. The method according to claim 35, wherein the second time interval is indicated by the network device, or the second time interval is a third default value.

38. The method according to any one of claims 34 to 37, wherein the performance monitoring request received by the network device is carried by a scheduling request (SR), a second UL MAC CE, or a random access (RA).

39. The method according to claim 34, wherein in response to sending the performance monitoring request to the terminal, the model performance information is obtained through the following manner:
the terminal starting to determine the model performance information after a third time interval of receiving by the terminal the performance monitoring request sent by the network device.

40. The method according to claim 39, wherein the third time interval is indicated by the network device, or the third time interval is a fourth default value.

41. The method according to claim 34, 39 or 40, wherein the performance monitoring request sent by the network device is carried by a second RRC, a downlink (DL) MAC CE, a paging, or downlink control information (DCI).

42. The method according to claim 22, wherein in response to a beam prediction model being run on the terminal, the method further comprises sending model status indication information to the terminal; or in response to the beam prediction model being run on the network device, the method further comprises determining the model status indication information based on the model performance information; wherein
the model status indication information comprises at least one of:
model activation indication information;
model deactivation indication information;
model switching indication information;
model tuning indication information; and
indication information for switching to a non-artificial intelligence (AI) mode.

43. A model performance monitoring apparatus, **characterized in that** the apparatus is configured in a terminal, and the apparatus comprises:
a determining module, configured to determine model performance information; and
a sending module, configured to send the model performance information to a network device.

44. A model performance monitoring apparatus, **characterized in that** the apparatus is configured in a network device, and the apparatus comprises:
a receiving module, configured to receive model performance information sent by a terminal.

45. A model performance monitoring device, **characterized in** comprising:
a processor; and
a memory, configured to store an instruction executable by the processor; wherein
the processor is configured to perform the method according to any one of claims 1 to 21.

46. A model performance monitoring device, **characterized in** comprising:
a processor; and
a memory, configured to store an instruction executable by the processor; wherein
the processor is configured to perform the method according to any one of claims 22 to 42.

47. A non-transitory computer-readable storage medium, wherein when an instruction in the storage medium is executed by a processor of a terminal, the terminal is caused to be capable of performing the method according to any one of claims 1 to 21.

48. A non-transitory computer-readable storage medium, wherein when an instruction in the storage medium is executed by a processor of a network device, the network device is caused to be capable of performing the method according to any one of claims 22 to 42.
